# EUROPEAN PATENT APPLICATION

(11) **EP 1 635 370 A1**
(43) Date of publication of application: **15.03.2006**
(21) Application number: 05255582.8
(22) Date of filing: 12.09.2005
(51) Int. Cl.: H01J 1/312, H01J 1/30, H01J 1/304, H01J 31/12

(54) **Electron-emitting apparatus**

(30) Priority: 13.09.2004 JP 2004266106
(71) Applicant: NGK INSULATORS, LTD., Nagoya-shi, Aichi-ken 467-8530 (JP)
(72) Inventor: Nanataki, Tsutomu, NGK Insulators, Ltd., Nagoya-shi Aichi-ken, 467-8530 (JP); Ohwada, Iwao, NGK Insulators, Ltd., Nagoya-shi Aichi-ken, 467-8530 (JP); Akao, Takayoshi, NGK Insulators, Ltd., Nagoya-shi Aichi-ken, 467-8530 (JP); Nakamura, Hirokazu, NGK Insulators, Ltd., Nagoya-shi Aichi-ken, 467-8530 (JP)
(74) Representative: Naylor, Matthew John

(57) **Abstract**

An electron-emitting apparatus includes an emitter section made of a dielectric material, lower electrodes, upper electrodes having micro through holes, insulating layers disposed on the upper surface of the emitter section and between the adjacent upper electrodes, and focusing electrodes to which a predetermine potential is applied and which are disposed on the insulating layers. The electron-emitting apparatus applies a negative potential to the upper electrode to accumulate electrons in the emitter section and then applies a positive potential to the upper electrode. As a result, the polarization of the emitter section is reversed, and the accumulated electrons are emitted through the micro through holes in the upper electrodes by Coulomb repulsion. Owing to electric fields generated by the focusing electrodes, the emitted electrons travel in the upward direction of the upper electrode without spreading into a shape of a cone.

## Description

### BACKGROUND OF THE INVENTION

### 1. Field of the Invention

The present invention relates to an electron-emitting apparatus including an emitter section made of a dielectric material, a lower electrode disposed below the emitter section, and an upper electrode disposed above the emitter section.

### 2. Description of the Related Art

In the related art, an electron-emitting apparatus including an emitter section made of a dielectric material, a lower electrode (lower electrode layer) disposed below the emitter section, and an upper electrode (upper electrode layer) disposed above the emitter section and having numerous micro trough holes has been known. According to this type of electron-emitting apparatus, a high-voltage pulse is applied between the upper electrode and the lower electrode to reverse the polarization of the dielectric material and to thereby emit electrons through the micro through holes in the upper electrode (e.g., refer to Japanese Patent No. 3160213, Claim 1, paragraphs 0016 to 0019, and Figs. 2 and 3). This electron-emitting apparatus further includes an insulating layer disposed on the entire upper surface of the upper electrode and a driver electrode layer formed above the insulating layer. In this apparatus, while the high-voltage pulse is continued to be applied between the upper electrode and the lower electrode to repeat the polarization reversal in the dielectric layer and to thereby generate electrons that can be emitted, a control signal, such as a video signal, is supplied to the driver electrode layer to ultimately determine whether the electrons should be emitted or not.

However, in this electron-emitting apparatus, high-voltage pulses are incessantly applied between the upper and lower electrodes to continue repeated polarization-reversing operation, even when the electrons are not required to be emitted eventually. Thus, the electron-emitting apparatus has a problem of large power consumption.

### SUMMARY OF THE INVENTION

An object of the present invention is to provide an electron-emitting apparatus that can ensure emission of electrons in a target direction with low power consumption.

The present invention provides an electron-emitting apparatus including at least two elements, which are a first element and a second element, each of which includes an emitter section made of a dielectric material, a lower electrode disposed below the emitter section, and an upper electrode disposed above the emitter section so as to oppose the lower electrode with the emitter section therebetween, the upper electrode having a plurality of micro through holes through which electrons are emitted by applying first a negative potential and then a positive potential to the upper electrode with respect to the lower electrode, when the electrons are required to be emitted. The potential difference between the upper electrode and the lower electrode of the first element is variable (controlled) independently from the potential difference between the upper electrode and the lower electrode of the second element.

According to this apparatus, when electrons are required to be emitted through the micro through holes in the upper electrode of the first element, a negative potential is first applied to the upper electrode with respect to the lower electrode so that the electrons are released from the upper electrode and are accumulated in the emitter section near the upper electrode. Then, a positive potential is applied to the upper electrode with respect to the lower electrode to reverse the polarization of the emitter section, thereby, the accumulated electrons are emitted through the micro through holes in the upper electrode of the first element by Coulomb repulsion.

Similarly, when electrons are required to be emitted through the micro through holes in the upper electrode of the second element, a negative potential is first applied to upper electrode with respect to the lower electrode so that electrons are released from the upper electrode and are accumulated in the emitter section near the upper electrode. Then, a positive potential is applied to the upper electrode with respect to the lower electrode to reverse the polarization of the emitter section, and thereby, the accumulated electrons are emitted through the micro through holes in the upper electrode of the second element by Coulomb repulsion.

In this manner, the electron-emitting apparatus of the present invention can control the electron emission of the first element independently with respect to the electron emission of the second element. In other words, each of these elements consumes energy to reverse the polarization of the emitter section only when the electron emission through the micro through holes of the upper electrode of that element is required. Thus, the electron-emitting apparatus does not consume unnecessary power when no electron emission is required, thereby achieving decreased power consumption.

The electron-emitting apparatus further includes an insulator disposed between the upper electrodes of the two elements and a focusing electrode (a bundling electrode to bundle emitted electrons) to which a predetermined voltage is applied, the focusing electrode being disposed on the insulator.

The focusing electrode generates an electric field. Electrons emitted from the first element travel in the upward direction from the upper electrode of the first element without spreading due to the electric field generated by the focusing electrode. Likewise, electrons emitted from the second element travel in the upward direction from the upper electrode of the second element without spreading due to the electric field generated by the focusing electrode. Consequently, it becomes possible to accurately irradiate a target site with the electrons.

The focusing electrode is interposed (placed) between the upper electrode of the first element and the upper electrode of the second element. The focusing electrode generates an electric field that affects electron emission from the upper electrodes of the two elements. Thus, when compared with an apparatus having one focusing electrode for every element, it becomes possible to reduce the total area of the focusing electrodes, and therefore, to increase the aperture ratio (the ratio of the area of the upper electrodes exposed to space in a plan view to the unit area) of the upper electrodes. Thus, a larger number of electrons can be emitted.

It is preferable to arrange the focusing electrode so that the focusing electrode does not overlap any of the upper electrodes of the two elements.

The focusing electrode controls the traveling direction of the electrons but does not control (determine) whether electrons should be emitted or not. Accordingly, the focusing electrode can be arranged in a manner mentioned above, and the focusing electrode thus arranged does not obstruct the paths of the electrons emitted. As a result, the electron-emitting apparatus can emit electrons with high efficiency. Alternatively, the focusing electrode may be arranged such that the peripheral portion of the focusing electrode slightly overlaps the peripheral portions of the upper electrodes in a plan view. In other words, the focusing electrode may be arranged such that it does not overlap the any of the upper electrodes in a plan view substantially.

Preferably, the electron-emitting apparatus further includes potential difference applying means for applying a predetermined potential difference between the upper electrode and the lower electrode of each element.

This potential difference applying means is configured to apply a potential difference between the upper electrode and the lower electrode of the first element so that the upper electrode has a negative potential with respect to the lower electrode so as to allow electrons to be released from the upper electrode toward the emitter section of the first element and to thereby accumulate the released electrons in the emitter section near the upper electrode, and is configured to subsequently apply a potential difference between the upper electrode and the lower electrode of the first element so that the upper electrode has a positive potential with respect to the lower electrode so as to allow electrons accumulated in the emitter section to be emitted through the micro through holes in the upper electrode of the first element, when the electrons are required to be emitted from the first element. The potential difference applying means is also configured to apply a potential difference between the upper electrode and the lower electrode of the second element so that the upper electrode has a negative potential with respect to the lower electrode so as to allow electrons to be released from the upper electrode toward the emitter section of the second element and to thereby accumulate the released electrons in the emitter section near the upper electrode, and is configured to subsequently apply a potential difference between the upper electrode and the lower electrode so that the upper electrode has a positive potential with respect to the lower electrode so as to allow electrons accumulated in the emitter section to be emitted through the micro through holes in the upper electrode of the second element, when the electrons are required to be emitted from the second element.

According to this potential difference applying means, the electrons accumulated in the emitter section of each element are emitted through the micro through holes in the upper electrode of that element.

Preferably, the electron-emitting apparatus further includes focusing electrode potential applying means for applying the predetermined potential to the focusing electrode.

With this means, electrons emitted through the micro through holes in the upper electrode of each element travel upward without spreading due to the electric field generated by the focusing electrode. Consequently, it becomes possible to accurately irradiate a target site with the electrons.

The focusing electrode potential applying means is preferably configured such that the focusing electrode potential applying means continues to apply to the focusing electrode a potential lower than the potential of the upper electrode during a period of emitting electrons through the micro through holes of the upper electrode of each element.

With this configuration, an electric field that causes electrons to travel in the upward direction of the upper electrode without spreading can be generated at least during the period of emitting electrons.

The focusing electrode potential applying means may apply the predetermined voltage which is constant to the focusing electrode. In this aspect, the configuration (circuit configuration) for applying the potential to the focusing electrode can be simplified.

Alternatively, the focusing electrode potential applying means may apply a time-varying voltage to the focusing electrode. In this aspect, a larger negative potential (a negative potential whose absolute value is larger) can be applied to the focusing electrode during the period of not emitting the electrons through the micro through holes than during the period of emitting electrons through the micro through holes. Thus, unnecessary electron emission can be suppressed.

Preferably, the focusing electrode potential applying means applies to the focusing electrode a potential difference with respect to the upper electrode of the first element.

According to this arrangement, the focusing electrode is given the predetermined potential difference with respect to the upper electrode. Thus, the focusing electrode can stably generate an electric field that causes electrons to travel in the upward direction of the upper electrode without spreading.

The focusing electrode potential applying means preferably causes the focusing electrode to maintain a floating state during a period in which electrons are released from the upper electrode of the first element toward the emitter section of the same element and being accumulated in the emitter section, and applies to the focusing electrode the predetermined potential during a period in which the electrons accumulated in the emitter section are emitted through the micro through holes in the upper electrode.

If, during the period of releasing electrons from the upper electrode of the one element toward the emitter section of the same element to accumulate the electrons in the emitter section, the focusing electrode is not maintained at a floating state (the state in which no potential is applied), the potential difference between the upper electrode and the focusing electrode (or the potential difference between the lower electrode and the focusing electrode) changes with changes in potential of the upper electrode (or the lower electrode). As a result, capacity coupling between the focusing electrode and the upper electrode (or capacity coupling between the focusing electrode and the lower electrode) causes a transient current to flow, thereby wasting the power. However, the focusing electrode potential applying means having the above-described configuration maintains the focusing electrode in the floating state during the period of releasing the electrons from the upper electrode of the one element to the emitter section of the same element. Thus, no transient current flows, and unnecessary power consumption can be avoided.

Preferably, the electron-emitting apparatus further includes a first phosphor for emitting light of a first color by electron irradiation, the first phosphor being disposed above the upper electrode of the first element, and a second phosphor for emitting light of a second color different from the first color by electron irradiation, the second phosphor being disposed above the upper electrode of the second element.

The electron-emitting apparatus having such a structure can be applied to a color display. Since the apparatus has the focusing electrode, the electrons emitted through the micro through holes in the upper electrode of the first element do not reach the second phosphor disposed above the second element. Similarly, the electrons emitted through the micro through holes in the upper electrode of the second element do not reach the first phosphor disposed above the first element. Consequently, the color purity is kept high, and a display that presents sharp images can be provided.

The electron-emitting apparatus preferably further includes a collector electrode placed near the first phosphor and the second phosphor in such a manner that the collector electrode is opposed to the upper electrodes of the first and second elements.

According to this aspect, electrons emitted from the upper electrode of the first element and electrons emitted from the upper electrode of the second element respectively collide with the first phosphor and the second phosphor with high energy, and thereby, increased luminance and emission of light with high efficiency can be realized. Thus, a display that can present sharper images can be provided.

Preferably, the electron-emitting apparatus further includes a space-forming member for forming a hermetically closed space (an enclosed space), and at least an upper part of the emitter section and the upper electrode of the first element and an upper part of the emitter section and the upper electrode of the second element are disposed inside the hermetically closed space under substantial vacuum. When the electron-emitting apparatus is applied to a display incorporating the above-described phosphors, the space-forming member may include the collector electrode, a transparent plate disposed near the collector electrode, and other associated components. Here, the entire first element and the entire second element may be disposed inside the hermetically closed space.

According to this structure, since the space in which electrons are emitted is under substantial vacuum, the number of molecules that inhibits rectilinear propagation of the electrons is small. Thus, the electrons can more securely reach the target site owing to this structure as well as the focusing electrode.

### BRIEF DESCRIPTION OF THE DRAWINGS

Fig. 1 is a partial cross-sectional view of an electron-emitting apparatus according to a first embodiment of the present invention;
Fig. 2 is a partial cross-sectional view of the electron-emitting apparatus shown in Fig. 1, taken along a different plane;
Fig. 3 is a partial plan view of the electron-emitting apparatus shown in Fig. 1;
Fig. 4 is an enlarged partial cross-sectional view of the electron-emitting apparatus shown in Fig. 1;
Fig. 5 is an enlarged partial plan view of an upper electrode shown in Fig. 1;
Fig. 6 shows a state of the electron-emitting apparatus shown in Fig. 1;
Fig. 7 is a graph indicating the voltage-polarization characteristic of an emitter section shown in Fig. 1;
Fig. 8 shows another state of the electron-emitting apparatus shown in Fig. 1;
Fig. 9 shows yet another state of the electron-emitting apparatus shown in Fig. 1;
Fig. 10 shows yet another state of the electron-emitting apparatus shown in Fig. 1;
Fig. 11 shows still another state of the electron-emitting apparatus shown in Fig. 1;
Fig. 12 shows another state of the electron-emitting apparatus shown in Fig. 1;
Fig. 13 is a diagram showing electron emission from an electron-emitting apparatus having no focusing electrode;
Fig. 14 is a diagram showing electron emission from the electron-emitting apparatus shown in Fig. 1;
Fig. 15 is a circuit diagram of an electron emission control circuit and a focusing electrode potential applying circuit shown in Fig. 1;
Fig. 16 is a partial plan view of a first modification example of the electron-emitting apparatus shown in Fig. 1;
Fig. 17 is a partial plan view of a second modification example of the electron-emitting apparatus shown in Fig. 1;
Fig. 18 is a partial plan view of a third modification example of the electron-emitting apparatus shown in Fig. 1;
Fig. 19 is a partial plan view of an electron-emitting apparatus according to a second embodiment of the present invention;
Fig. 20 is a cross-sectional view of the electron-emitting apparatus taken along line XX-XX in Fig. 19;
Fig. 21 is a cross-sectional view of the electron-emitting apparatus taken along line XXI-XXI in Fig. 19;
Fig. 22 is a cross-sectional view of the electron-emitting apparatus taken along line XXII-XXII in Fig. 19;
Fig. 23 is a partial plan view of an electron-emitting apparatus according to a third embodiment of the present invention;
Fig. 24 is a cross-sectional view of the electron-emitting apparatus taken along line XXIV-XXIV in Fig. 23;
Fig. 25 is a cross-sectional view of the electron-emitting apparatus taken along line XXV-XXV in Fig. 24;
Fig. 26 is a diagram showing a basic configuration of the electron emission control circuit and the focusing electrode potential applying circuit;
Fig. 27 is a diagram showing a modification of the electron emission control circuit and the focusing electrode potential applying circuit;
Fig. 28 is a diagram showing another modification of the electron emission control circuit and the focusing electrode potential applying circuit;
Fig. 29 is a diagram showing another modification of the electron emission control circuit and the focusing electrode potential applying circuit;
Fig. 30 is a diagram showing another modification of the electron emission control circuit and the focusing electrode potential applying circuit;
Fig. 31 is a diagram showing another modification of the electron emission control circuit and the focusing electrode potential applying circuit;
Fig. 32 is a diagram showing another modification of the electron emission control circuit and the focusing electrode potential applying circuit; and
Fig. 33 is a diagram showing a modification of phosphors and a collector electrode of the electron-emitting apparatus shown in Fig. 1.

### DESCRIPTION OF THE PREFERRED EMBODIMENTS

Electron-emitting apparatuses according to the preferred embodiments of the present invention will now be described with reference to the drawings.

### First Embodiment

### Structure

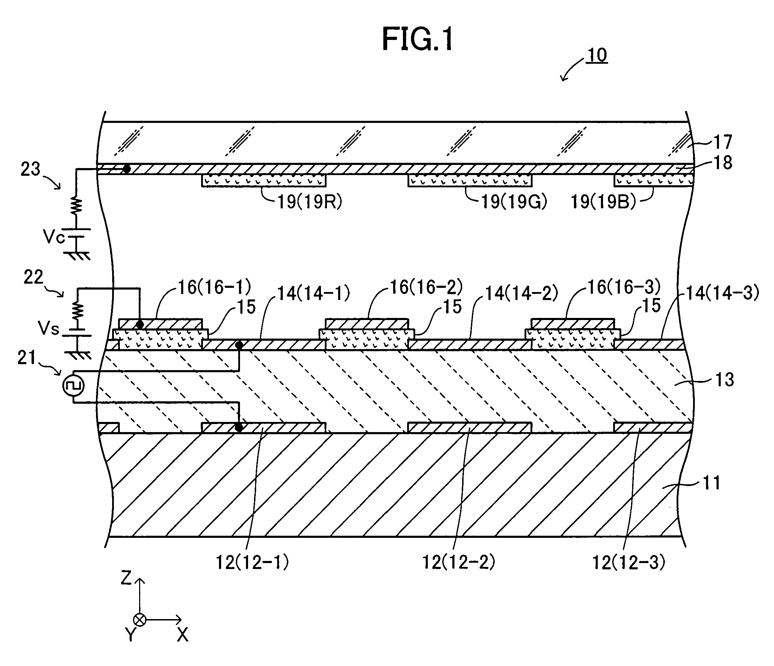

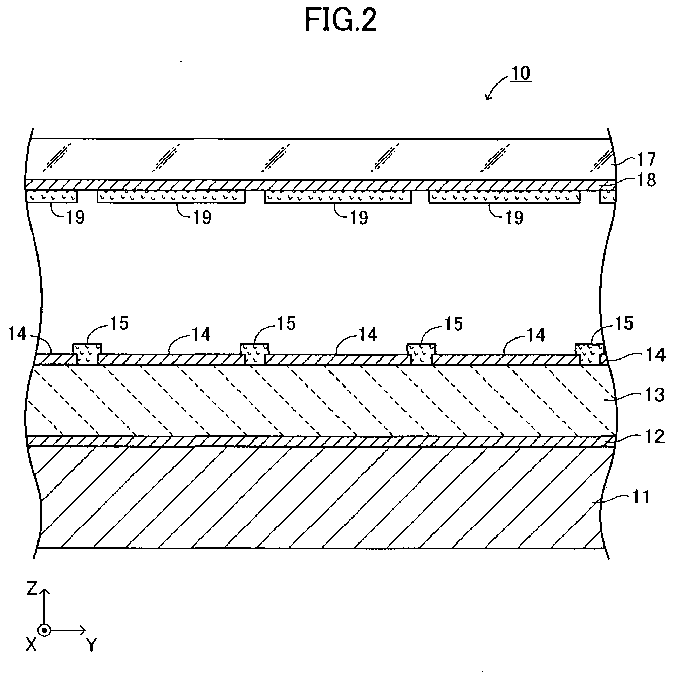

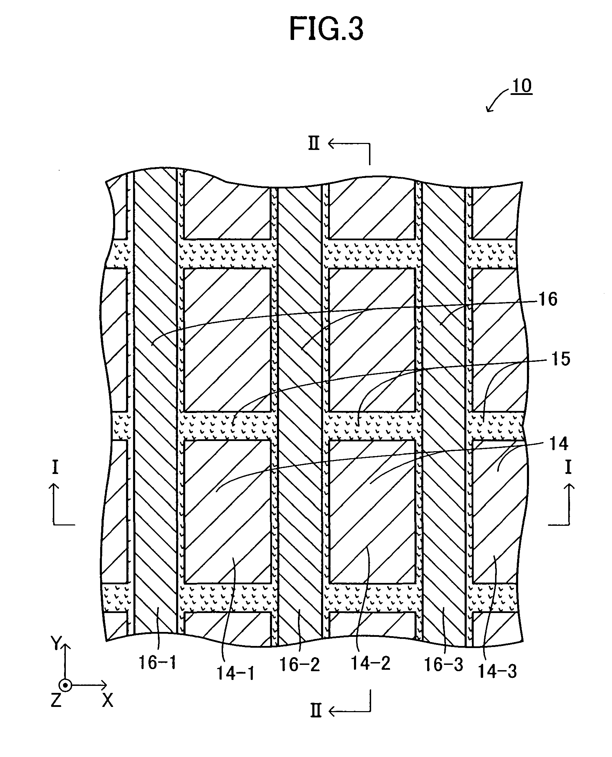

As shown in Figs. 1 to 3, an electron emitting apparatus (an electron emitting device) 10 according to a first embodiment of the present invention includes a substrate 11, a plurality of lower electrodes (lower electrode layers) 12, an emitter section 13, a plurality of upper electrodes (upper electrode layers) 14, insulating layers 15, and focusing electrodes (focusing electrode layers, a bundling electrode to bundle emitted electrons) 16. Fig. 1 is a cross-sectional view of the electron emitting apparatus 10 taken along line I-I in Fig. 3, which is a partial plan view of the electron emitting apparatus 10. Fig. 2 is a cross-sectional view of the electron emitting apparatus 10 taken along line II-II in Fig. 3.

The substrate 11 is a thin plate having an upper surface and a lower surface parallel to the plane (X-Y plane) defined by the X axis and the Y axis perpendicular to each other. The thickness direction of the substrate 11 is the Z-axis direction perpendicular to both the X and Y axes. The substrate 11 is made of glass or ceramic (preferably, a material mainly made of zirconium oxide).

Each of the lower electrodes 12 is a layer made of a conductive material, e.g., silver or platinum in this embodiment, and is disposed (formed) on the upper surface of the substrate 11. In a plan view, each lower electrode 12 has a shape of a strip, the longitudinal direction of which is the Y-axis direction. As shown in Fig. 1, the adjacent two lower electrodes 12 are apart from each other by a predetermined distance in the X-axis direction. Note that in Fig. 1, the lower electrodes 12 represented by reference numerals 12-1, 12-2, and 12-3 are respectively referred to as a first lower electrode, a second lower electrode, and a third lower electrode for the convenience sake.

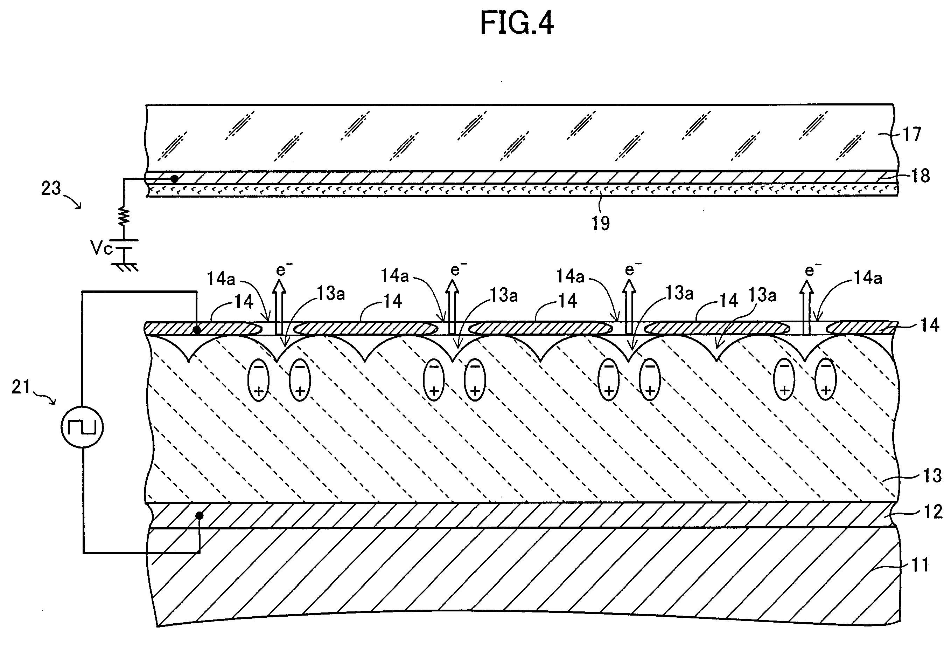

The emitter section 13 is made of a dielectric material having a high relative dielectric constant, for example, a three-component material PMN-PT-PZ composed of lead magnesium niobate (PMN), lead titanate (PT), and lead zirconate (PZ). Materials for the emitter section 13 will be described in greater detail below. The emitter section 13 is disposed (formed) on the upper surfaces of the substrate 11 and lower electrodes 12. The emitter section 13 is a thin plate similar to the substrate 11. As shown in an enlarged view in Fig. 4, the upper surface of the emitter section 13 has irregularities (asperity) 13a formed by the grain boundaries of the dielectric material.

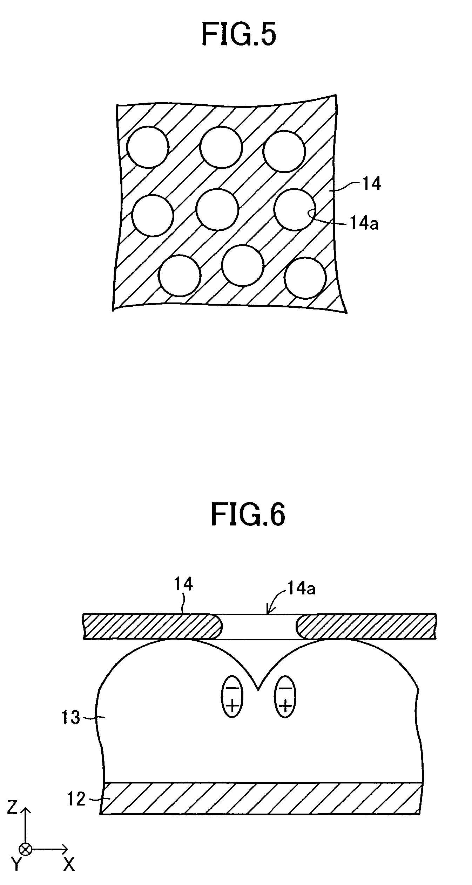

Each of the upper electrodes 14 is a layer made of a conductive material, i.e., platinum in this embodiment, and is disposed (formed) on the upper surface of the emitter section 13. As shown in a plan view of Fig. 3, each upper electrode 14 has a shape of a rectangle having a short side and a long side respectively lying in the X-axis direction and the Y-axis direction. The upper electrodes 14 are apart from one another and are arranged into a matrix. Each upper electrode 14 is opposed to the corresponding lower electrode 12. In a plan view, the upper electrode 14 is disposed at a position that overlaps the corresponding lower electrode 12. Furthermore, as shown in Fig. 4 and Fig. 5, which is a partial enlarged view of the upper electrode 14, each upper electrode 14 has a plurality of micro through holes 14a. Note that in Figs. 1 and 3, the upper electrodes 14 represented by reference numerals 14-1, 14-2, and 14-3 are respectively referred to as a first upper electrode, a second upper electrode, and a third upper electrode for the convenience sake. The upper electrodes 14 aligned in the same row with respect to the X-axis direction (i.e., in the same row extending along the Y-axis direction) are connected to one another by a layer (not shown) made of a conductor and are maintained at the same electric potential.

The lower electrodes 12, the emitter section 13, and the upper electrodes 14 made of a platinum resinate paste are monolithically integrated by firing (baking). As a result of the firing, the upper electrode 14 shrinks and its thickness of the upper electrode 14 reduces, for example, from 10 µm to 0.1 µm. As a result, the micro through holes 14a are formed in the upper electrode 14.

The portion where an upper electrode 14 overlaps a corresponding lower electrode 12 in a plan view forms one (independent) element for emitting electrons. For example, the first lower electrode 12-1, the first upper electrode 14-1, and the portion of the emitter section 13 sandwiched between the first lower electrode 12-1 and the first upper electrode 14-1 form a first element. The second lower electrode 12-2, the second upper electrode 14-2, and the portion of the emitter section 13 sandwiched between the second lower electrode 12-2 and the second upper electrode 14-2 form a second element. The third lower electrode 12-3, the third upper electrode 14-3, and the portion of the emitter section 13 sandwiched between the third lower electrode 12-3 and the third upper electrode 14-3 form a third element. In this manner, the electron-emitting apparatus 10 includes a plurality of independent electron-emitting elements.

The insulating layers 15 are disposed (formed) on the upper surface of the emitter section 13 so as to fill the gaps between the upper electrodes 14. The thickness (the length in the Z-axis direction) of each insulating layer 15 is slightly larger than the thickness (the length in the Z-axis direction) of each upper electrode 14. As shown in Figs. 1 and 2, the end portions of the insulating layers 15 in the X-axis direction and the Y-axis direction cover the end portions of the upper electrodes 14 in the X-axis and Y-axis directions, respectively.

Each of the focusing electrodes 16 is a layer made of a conductive material, i.e., silver in this embodiment, and are disposed (formed) on each of the insulating layers 15. As shown in a plan view of Fig. 3, each focusing electrode 16 has a shape of a strip whose longitudinal direction is the Y-axis direction. Each focusing electrode 16 is disposed (formed) between the adjacent upper electrodes 14 in the X-axis direction in the plan view. In detail, each focusing electrode 16 is disposed between the upper electrodes of the elements adjacent to each other in the X-axis direction and is slightly obliquely above the upper electrodes. All the focusing electrodes 16 are connected to one another by a layer (not shown) made of a conductor.

In Figs. 1 and 3, the focusing electrodes 16 represented by reference numerals 16-1, 16-2, and 16-3 are respectively referred to as a first focusing electrode, a second focusing electrode, and a third focusing electrode for the convenience sake. The second focusing electrode 16-2 lies between the first upper electrode 14-1 of the first element and the second upper electrode 14-2 of the second element and is located obliquely above the first and second upper electrodes 14-1 and 14-2. Similarly, the third focusing electrode 16-3 is between the second upper electrode 14-2 of the second element and the third upper electrode 14-3 of the third element and is located obliquely above the second and third upper electrodes 14-2 and 14-3.

The electron emitting apparatus 10 is applied to a display and further includes a transparent plate 17, a collector electrode (collector electrode layer) 18, and phosphors 19.

The transparent plate 17 is made of a transparent material (glass or acrylic resin in this embodiment), and is disposed above the upper electrodes 14 so that the transparent plate 17 is apart from the upper electrodes 14 in the Z-axis direction by a predetermined distance. The upper and lower surfaces of the transparent plate 17 are parallel to the upper surfaces of the emitter section 13 and the upper electrodes 14, and lie in the X-Y plane.

The collector electrode 18 is made of a conductive material. In this embodiment, the collector electrode 18 is a transparent conductive film made of indium tin oxide (ITO) and is formed as a layer covering the entire lower surface of the transparent plate 17.

Each phosphor 19 emits red, green, or blue light by the collision of electrons. In a plan view, each phosphor 19 has substantially the same shape as that of the upper electrode 14 and overlaps the corresponding upper electrode 14. In Fig. 1, the phosphors 19 represented by reference numerals 19R, 19G, and 19B respectively emit red, green, and blue light. In this embodiment, the red phosphor 19R is disposed directly above the first upper electrode 14-1 (i.e., in the positive direction of the Z axis), the green phosphor 19G is disposed directly above the second upper electrode 14-2, and the blue phosphor 19B is disposed directly above the third upper electrode 14-3. The space surrounded by the emitter section 13, the upper electrodes 14, the insulating layers 15, the focusing electrodes 16, and the transparent plate 17 (the collector electrode 18) is maintained under substantial vacuum of preferably 10² to 10⁻⁶ Pa and more preferably 10⁻³ to 10⁻⁵ Pa.

In other words, the side walls (not shown) of the electron emitting apparatus 10, the transparent plate 17, and the collector electrode 18 serve as the members for defining a hermetically closed space (an enclosed space), and this hermetically closed space is maintained under substantial vacuum. The elements (at least the upper part of the emitter section 13 and the upper electrode 14 of each element) of the electron emitting apparatus 10 are disposed inside the hermetically closed space under substantial vacuum.

As shown in Fig. 1, the electron emitting apparatus 10 further includes an electron emission control circuit (potential difference applying means) 21, a focusing electrode potential applying circuit (focusing electrode potential applying means) 22, and a collector potential applying circuit (collector potential applying means) 23.

The electron emission control circuit 21 is connected to the upper electrodes 14 and the lower electrodes 12 to apply pulsed potential differences (the detailed description of which is provided below). The focusing electrode potential applying circuit 22 is connected to the focusing electrodes 16 to constantly apply a predetermined negative potential (voltage) Vs to the focusing electrodes 16. The collector potential applying circuit 23 is connected to the collector electrode 18 to apply a positive potential (voltage) Vc to the collector electrode 18.

### Principle of Operation

The principle of the operation of the electron emitting apparatus 10 having the above-described structure will now be explained.

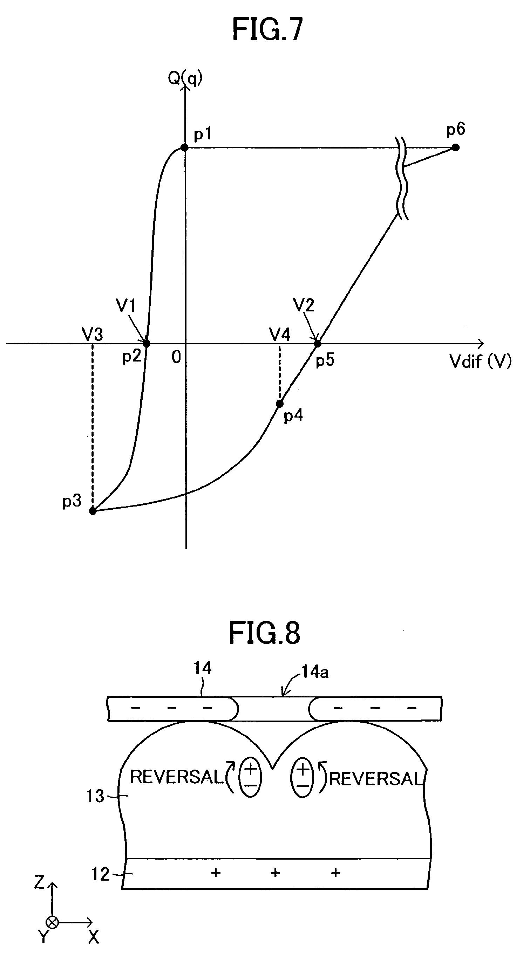

First, as shown in Fig. 6, the state is described in which potential difference V_{dif} between the upper electrode 14 and the lower electrode 12 is zero and the negative pole of a dipole in the emitter section 13 is oriented toward the upper surface of the emitter section 13 (in the positive direction of the Z axis and toward the upper electrode 14). This state is observed at a point p1 on the graph shown in Fig. 7. The graph in Fig. 7 shows the voltage-polarization characteristic of the emitter section 13 and has the abscissa indicating the potential difference V_{dif} between the upper electrode 14 and the lower electrode 12 (i.e., the potential of the upper electrode 14 with respect to the potential of the lower electrode 12) and the ordinate indicating the charge Q near the upper electrode 14.

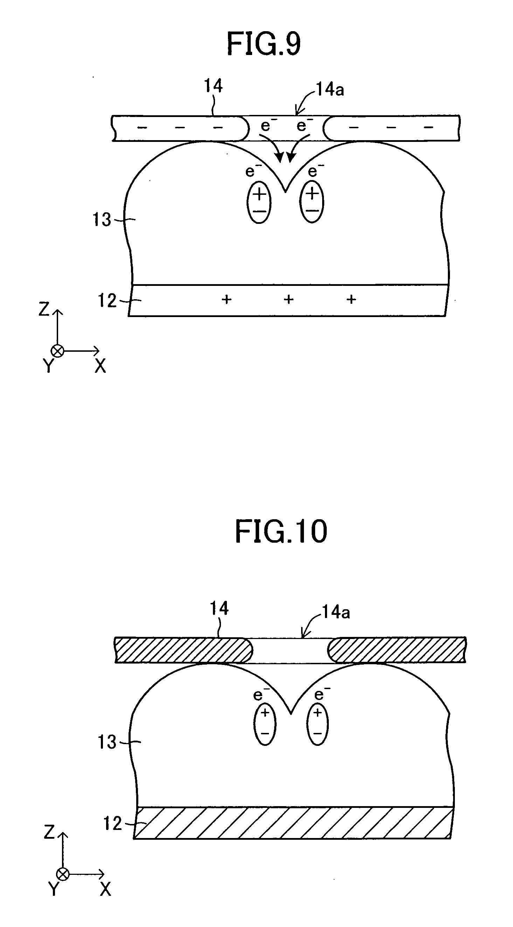

The electron emission control circuit 21 increases the potential difference V_{dif} in the negative direction. As a result, dipole reversal starts near a point p2 at which the potential difference V_{dif} equals a negative coercive voltage V₁. In other words, the polarization reversal starts from this point, as shown in Fig. 8. The polarization reversal increases the electric field in the contact sites (triple junctions) between the upper surface of the emitter section 13, the upper electrodes 14, and the ambient medium (in this embodiment, vacuum) and/or the electric field at the distal end portions (which forms the micro through hole) of the upper electrodes 14. In other words, concentration of the electric field is observed in these sites. As a result, as shown in Fig. 9, electrons are released from the upper electrodes 14 toward the emitter section 13.

The released electrons are accumulated mainly in the upper part of the emitter section 13 near the region exposed through the micro through hole 14a and near the distal end portions of the upper electrode 14 that define the micro through hole 14a. This portion where the released electrons are accumulated is hereinafter simply referred to as "the region near the micro through hole 14a". Subsequently, the electron emission control circuit 21 further increases the potential difference V_{dif} in the negative direction. Accumulation of electrons proceeds as a result, and the state eventually becomes a state in which electron accumulation no longer proceeds (saturation state of electron accumulation). This state is observed at a point p3 in the graph of Fig. 7.

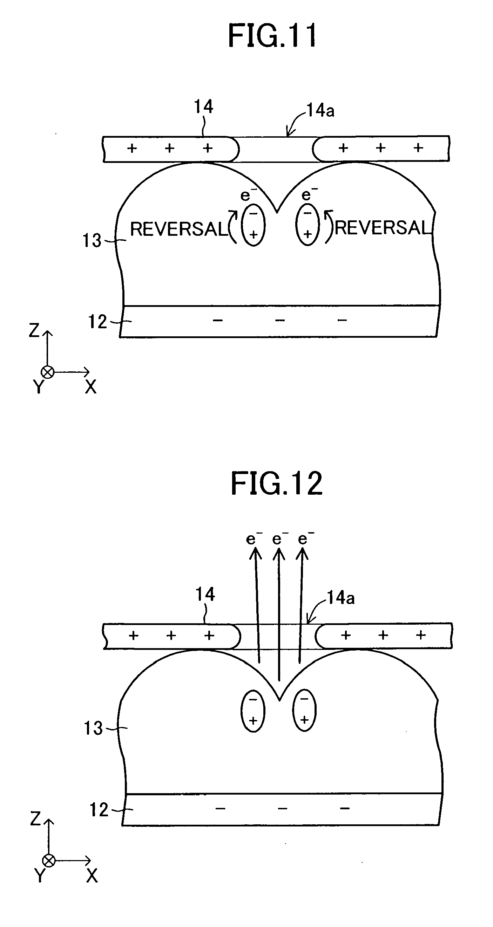

The electron emission control circuit 21 then decreases the potential difference V_{dif} toward zero, and then increases the potential difference V_{dif} in the positive direction. As long as the potential difference V_{dif} is smaller than the potential difference at a point p4 in the graph of Fig. 7, the state of the emitter section 13 in which the electrons are accumulated remains uncharged as shown in Fig. 10. Thereafter, the electron emission control circuit 21 increases the potential difference V_{dif} further in the positive direction. As a result, the negative pole of the dipole starts to orient toward the upper surface of the emitter section 13. In other words, as shown in Fig. 11, the polarization reversal occurs for the second time. This state is observed near the point p4 in the graph of Fig. 7.

The electron emission control circuit 21 continues to increase the potential difference V_{dif} in the positive direction. As a result, the number of dipoles whose negative poles orient toward the upper surface of the emitter section 13 increases. Consequently, as shown in Fig. 12, the electrons accumulated near the micro thorough holes 14a starts to be emitted upward (i.e., in the positive direction of the Z axis) through the micro through holes 14a by Coulomb repulsion.

The electron emission control circuit 21 increases the potential difference V_{dif} further in the positive direction. This operation promotes polarization reversal in the region beyond a point p5 in Fig. 7 and increases the amount of electrons emitted. As a result, most of the accumulated electrons are emitted. This state is observed at a point p6 in the graph of Fig. 7. The electron emission control circuit 21 then decreases the potential difference V_{dif} in the negative direction to allow the emitter section 13 to return to the initial state shown in Fig. 9 (the state observed at the point p1 in the graph of Fig. 7). This summarizes the working principle of the electron emission.

The electron emission control circuit 21 applies a negative potential difference V_{dif} only to the upper electrodes 14 from which the electron are required to be emitted and maintains the potential difference V_{dif} of other upper electrodes 14 at zero. Subsequently, the electron emission control circuit 21 applies a large positive potential difference V_{dif} to all the upper electrodes 14 so that electrons are emitted only from the micro through holes 14a of the upper electrodes 14 to which the negative potential difference V_{dif} has been previously applied. Polarization reversal does not occur in the emitter section 13 near the upper electrodes 14 from which electron emission is not required.

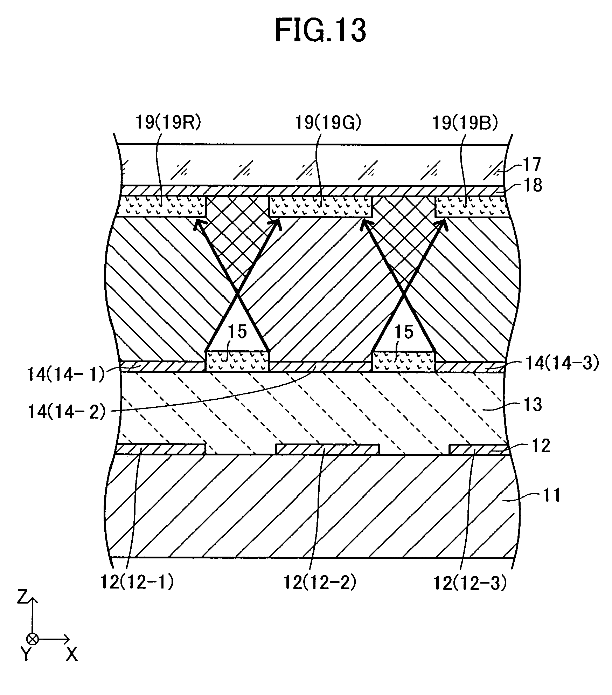

In an apparatus of the related art, when electrons are emitted through the micro through holes 14a of the upper electrodes 14, the electrons travel in the positive direction of the Z axis with spreading into the shape of a cone, as shown in Fig. 13. Thus, in the apparatus of the related art, electrons emitted from one upper electrode 14 (e.g., the second upper electrode 14-2) reach not only the phosphor 19 (e.g., the green phosphor 19G) directly above that upper electrode 14 but also the other phosphors 19 (e.g., the red phosphor 19R and the blue phosphor 19B) adjacent to this phosphor 19. This decreases color purity and sharpness of images.

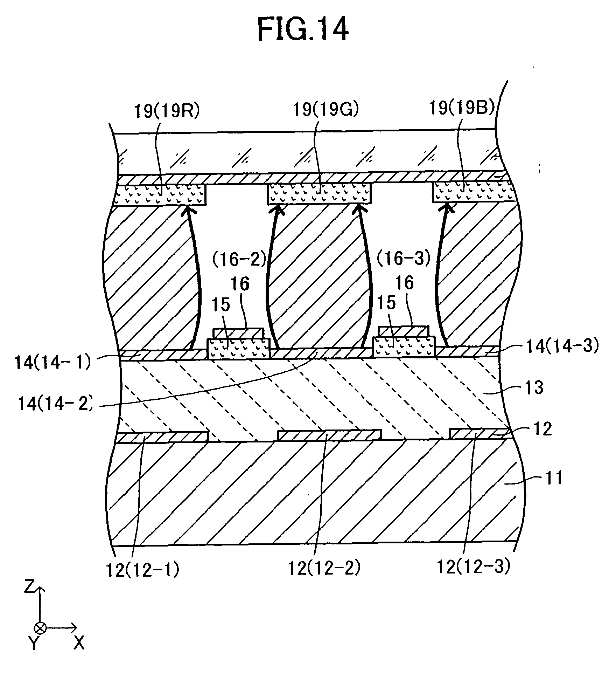

In contrast, the electron emitting apparatus 10 of this embodiment has focusing electrodes 16 to which a negative potential is applied. Each focusing electrode 16 is interposed between the adjacent upper electrodes 14 (i.e., between the upper electrodes of the adjacent elements) and is disposed at a position slightly above the upper electrodes 14. Thus, as shown in Fig. 14, the electrons emitted from the micro through holes 14a travel substantially directly upward without spreading owing to the electric field applied from the focusing electrode 16. In other words, the velocity of the electrons contains the Z-axis positive direction component but substantially none of the Y-axis direction and the X-axis direction components. As a result, the electrons emitted from the first upper electrode 14-1 reach only the red phosphor 19R, the electrons emitted from the second upper electrode 14-2 reach only the green phosphor 19G, and the electrons emitted from the third upper electrode 14-3 reach only the blue phosphor 19B. Thus, the color purity of the display does not decrease, and sharper images can be obtained as a result.
Specific Structures and Operations of the Electron-Emission Control Circuit and the Focusing Electrode Potential Applying Circuit

The specific structures and operations of the electron emission control circuit 21 and the focusing electrode potential applying circuit 22 will now be described.

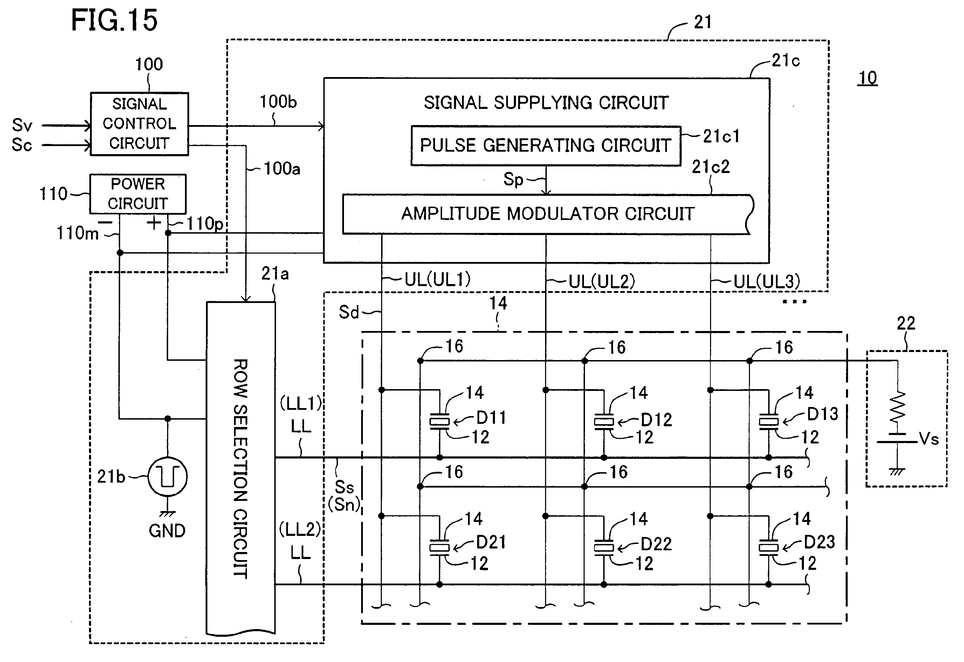

Referring to Fig. 15, the electron emitting apparatus 10 includes a signal control circuit 100 and a power circuit 110 in addition to the electron emission control circuit 21 and the focusing electrode potential applying circuit 22 described above. The electron emission control circuit 21 includes a row selection circuit 21 a, a pulse generator 21 b, and a signal supplying circuit 21 c. In Fig. 15, the components labeled D11, D12, ...D22, and D23 each represent one element, i.e., an electron-emitting element (one element constituted from the portion where upper electrode 14 is superimposed on the lower electrode 12 with the emitter section 13 therebetween). In this embodiment, the electron emitting apparatus 10 has a number n of elements in the row direction and a number m of elements in the column direction.

The row selection circuit 21 a is connected to a control signal line 100a of the signal control circuit 100, a positive electrode line 110p and a negative electrode line 110m of the power circuit 110. The row selection circuit 21 a is also connected to a plurality of row selection lines LL. Each row selection line LL is connected to the lower electrodes 12 of a certain group of the elements. For example, a row selection line LL1 is connected to the lower electrodes 12 of elements D11, D12, D13, ... and D1 m, and a row selection line LL2 is connected to the lower electrodes 12 of elements D21, D22, D23, ... and D2m.

The row selection circuit 21 a outputs a selection signal Ss (a 50-V voltage signal in this embodiment) to one of the row selection lines LL for a predetermined time (row selection time) Ts and outputs non-selection signals Sn (a 0-V voltage signal in this embodiment) to the rest of the row selection lines LL in response to the control signal from the signal control circuit 100. The row selection line LL to which the selection signal Ss is output from the row selection circuit 21 a is sequentially changed every predetermined row selection time Ts.

The pulse generator 21 b generates a reference voltage (0 V in this embodiment) during a charge accumulation period Td and a predetermined fixed voltage (-400 V in this embodiment) during an emission period (electron emitting period) Th. The pulse generator 21 b is coupled between the negative electrode line 110m of the power circuit 110 and the ground (GND).

The signal supplying circuit 21 c is connected to the a control signal line 100b of the signal control circuit 100, the positive electrode line 110p and the negative electrode line 110m of the power circuit 110. The signal supplying circuit 21 c has a pulse generating circuit 21 c1 and an amplitude modulator circuit 21 c2 inside.

The pulse generating circuit 21 c1 outputs a pulse signal Sp having a predetermined amplitude (50 V in this embodiment) at a predetermined pulse period during the charge accumulation period Td, and outputs a reference voltage (0 V in this embodiment) during the emission period Th.

The amplitude modulator circuit 21 c2 is connected to the pulse generating circuit 21 c1 so as to receive the pulse signal Sp from the pulse generating circuit 21c1. Further, the amplitude modulator circuit 21 c2 is connected to a plurality of pixel signal lines UL. Each pixel signal line UL is connected the upper electrodes 14 of a certain group of elements (elements in the same column). For example, a pixel signal line UL1 is connected to the upper electrodes 14 of the elements D11, D21, ... and Dn1 of the first column, a pixel signal line UL2 is connected to the upper electrodes 14 of the elements D12, D22, ... and Dn2 of the second column, and a pixel signal line UL3 is connected to the upper electrodes 14 of the elements D13, D23, ... and Dn3 of the third column.

During the charge accumulation period Td, the amplitude modulator circuit 21 c2 modulates the amplitude of the pulse signal Sp according to the luminance levels of the pixels in the selected row, and outputs the modulated signal (a voltage signal of 0 V, 30 V, or 50 V in this embodiment), which serves as a pixel signal Sd, to the pixel signal lines UL (UL1, UL2, ... and ULm). During the emission period Th, the amplitude modulator circuit 21 c2 outputs, without any modulation, the reference voltage (0 V) generated by the pulse generating circuit 21 c1.

The signal control circuit 100 receives a video signal Sv and a sync signal Sc and outputs a signal for controlling the row selection circuit 21 a to the control signal line 100a and a signal for controlling the signal supplying circuit 21 c to the control signal line 100b, based on these received signals.

The power circuit 110 outputs voltage signals to the positive electrode line 110p and the negative electrode line 110m so that the potential of the positive electrode line 110p is higher than the potential of the negative electrode line 110m by a predetermined voltage (50 V in this embodiment).

The focusing electrode potential applying circuit 22 is coupled to a connecting line SL that connects all of the focusing electrodes 16. The focusing electrode potential applying circuit 22 applies to the connecting line SL a potential Vs (e.g., -50 V) with respect to the ground.

The operation of the circuit having the above-described structure will now be described.

At a particular time, the row selection circuit 21 a outputs a selection signal Ss (50 V) to the row selection line LL1 of the first row based on the control signal from the signal control circuit 100 and outputs non-selection signals Sn (0 V) to the rest of the row selection lines LL. As a result, the potential of the lower electrodes 12 of the elements D11, D12, D13, ... and D1m in the first row becomes the voltage (50 V) of the selection signal. The potential of the lower electrodes 12 of the other elements, for example, the elements D21, D22, ...and D2m in the second row and the elements D31, D32, ...and D3m in the third row, becomes the voltage (0 V) of the non-selection signal.

At this time, the signal supplying circuit 21 c outputs pixel signals Sd (0 V, 30 V, or 50 V in this embodiment) to the pixel signal lines UL (UL1, UL2, ... and ULm) based on the control signal from the signal control circuit 100. The pixel signals Sd correspond to the luminance level of the respective pixels constituted from the elements of the selected row, i.e., in this case, the elements D11, D12, D13, ... and D1m in the first row.

For example, assuming that a 0-V pixel signal Sd is supplied to the pixel signal line UL1, the potential difference V_{dif(D11)} of the upper electrode 14 of the element D11 with respect to the corresponding lower electrode 12 becomes -50 V. A large number of electrons are thus accumulated in the emitter section 13 near the upper electrode 14 of the element D11. Assuming that a 30-V pixel signal Sd is supplied to the pixel signal line UL2, the potential difference V_{dif(D12)} of the upper electrode 14 of the element D12 with respect to the corresponding lower electrode 12 becomes -20 V, i.e., 30 V - 50 V.

As a result, fewer electrons are stored in the emitter section 13 near the upper electrode 14 of the element D12 than in the element D11. Assuming that a 50-V pixel signal Sd is supplied to the pixel signal line UL3, the potential difference V_{dif(D13)} of the upper electrode 14 of the element D13 with respect to the corresponding lower electrode 12 becomes 0 V (= 50 V-50 V). Thus, no electron is accumulated in the emitter section 13 of the element D13 and polarization reversal does not occur in the emitter section 13 of the element D13.

Once the row selection time Ts is elapsed, the row selection circuit 21 a outputs a 50-V selection signal Ss to the row selection line LL2 of the second row based on the control signal from the signal control circuit 100 and outputs 0-V non-selection signals Sn to the rest of the row selection lines LL. By this operation, the potential of the lower electrodes 12 of the elements D21, D22, D23, ... and D2m in the second row becomes the voltage (50 V) of the selection signal Ss. The potential of the lower electrodes 12 of the rest of the elements (e.g., the elements D11 to D1 m in the first row and the elements D31 to D3m in the third row) becomes the voltage (0 V) of the non-selection signals Sn.

At this time, the signal supplying circuit 21 c outputs pixel signals Sd (0 V, 30 V, or 50 V in this embodiment) to the pixel signal lines UL (UL1, UL2, ... and ULm) based on the control signal from the signal control circuit 100. The pixel signals Sd correspond to the luminance level of the respective pixels constituted from the elements of the selected row, i.e., in this case, the elements D21, D22, D23, ... and D2m in the second row. As a result, electrons are accumulated in the emitter sections of the elements D21, D22, D23, ... and D2m in the second row, in amounts corresponding to the pixel signals Sd.

Further, when the row selection time Ts is elapsed, the row selection circuit 21 a outputs a 50-V selection signal to the row selection line LL3 (not shown) of the third row based on the control signal from the signal control circuit 100 and outputs 0-V non-selection signals Sn to the rest of the row selection lines LL. Meanwhile, the signal supplying circuit 21 c outputs pixel signals Sd corresponding to the luminance levels of the respective pixels constituted from the elements in the selected third row to the pixel signal lines UL. Such an operation is repeated every row selection time Ts until all of the columns are selected. As a result, electrons are accumulated in the emitter sections of all the elements in amounts (including zero) corresponding to the luminance levels of the respective elements. This summarizes the operation that takes place during the charge accumulation period Td.

Subsequently, during the subsequent emission period Th, the row selection circuit 21 a applies a large negative voltage to all of the row selection lines LL. In this embodiment, the applied voltage is -350 V, i.e., the difference between +50 V generated by the power circuit 110 and -400 V generated by the pulse generator 21 b. Consequently, the potential of the lower electrodes 12 of all the elements becomes a large negative voltage (-350 V). Meanwhile, the signal supplying circuit 21 c outputs the reference voltage (0 V), which is generated by the pulse generating circuit 21 c1 and supplied through the amplitude modulator circuit 21 c2, to all of the pixel signal lines UL without modulation. As a result, the potential of the upper electrodes 14 of all the elements becomes the reference voltage (0 V).

Consequently, because the potential difference V_{dif} between the upper electrode 14 and the corresponding lower electrode 12 becomes a large positive voltage (350 V) in all of the elements, the electrons accumulated in the emitter section 13 of the respective elements are released all at once due to Coulomb repulsion. This causes the phosphors above the elements to emit light and to thereby display images. Note that in the emitter section of the elements ,to which a zero potential difference V_{dif} is applied during the charge accumulation period Td and which does not have accumulated electrons as a result, no polarization reversal has occurred. Accordingly, no polarization reversal occurs even when the potential difference V_{dif} is turned to a large positive voltage. Therefore, for example, the element that is not required to emit light for the purpose of producing a particular image at a particular timing does not waste energy for the polarization reversal.

Moreover, as is previously stated, since a predetermined voltage (Vs) is applied to each focusing electrode 16, the electrons released from the upper electrode 14 only reach the phosphor directly above the upper electrode 14. Thus, a sharp image can be produced.

Modification examples of the electron-emitting apparatus of the first embodiment applied to displays will be described below. It should be understood that the features not specifically described in the respective modification examples are identical to those of the first embodiment described above. The modification examples below equally apply to other electron-emitting apparatus of the present invention described below.

### First Modification Example of First Embodiment

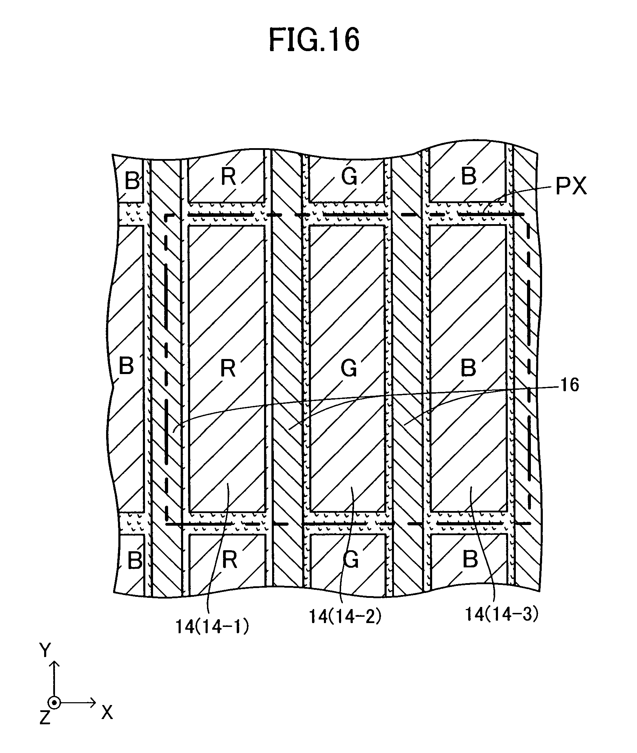

As shown in the plan view of Fig. 16, one pixel PX of a first modification example includes three upper electrodes 14 (a first upper electrode 14-1, a second upper electrode 14-2, and a third upper electrode 14-3) for emitting light of three different colors. The three upper electrodes 14 are aligned in the X-axis direction. As in the first embodiment described above, a red phosphor (not shown) is disposed directly above the first upper electrode 14-1, a green phosphor (not shown) is disposed directly above the second upper electrode 14-2, and a blue phosphor (not shown) is disposed directly above the third upper electrode 14-3. The pixels PX are aligned such that the upper electrodes 14-1 of these pixels are aligned in a column extending in the Y-axis direction and so are the upper electrodes 14-2 and the upper electrodes 14-3. According to this arrangement, the pixels of the display including the electron-emitting apparatus of the first modification example are arranged into a vertical stripe. In the first modification example, the focusing electrodes 16 are disposed only between the upper electrodes adjacent in the X-axis direction in a plan view, as shown in Fig. 16.

Thus, according to the first modification example, electrons emitted from the upper electrode 14 of a particular element do not reach the phosphors disposed above the upper electrodes 14 of the other elements adjacent to this particular element in the X-axis direction. This prevents a decrease in color purity. Accordingly, sharp images can be produced in the first modification example. It should be understood that since no focusing electrode 16 is formed between the upper electrodes of the elements adjacent in the Y-axis direction, electrons emitted from the upper electrode 14 of a particular element may reach the phosphor disposed above the upper electrode 14 of the adjacent element in the Y-axis direction and may cause that phosphor to emit light. However, since the color of light emitted as such is the same as the target color, color purity does not decrease.

### Second Modification Example of First Embodiment

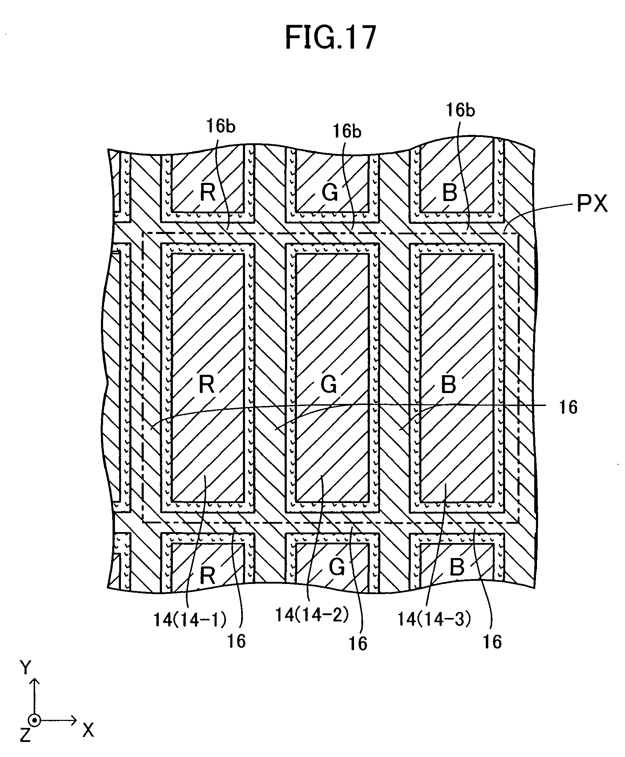

A display incorporating a second modification example of the electron-emitting apparatus of the present invention will now be described with reference to Fig. 17. In this second modification example, the focusing electrodes 16 are disposed not only between the adjacent upper electrodes 14 in the X-axis direction in the plan view but also between the upper electrodes 14 adjacent in the Y-axis direction. This arrangement is the only difference between the second modification example and the first modification example.

In the second modification example, as in the first modification example, electrons emitted from the upper electrode 14 of a particular element does not reach the phosphors disposed above the upper electrodes 14 of the other elements adjacent to this particular element in the X-axis direction. Thus, satisfactory color purity can be maintained. Furthermore, in the second modification example, the focusing electrodes 16 are also disposed between the upper electrodes 14 of the elements adjacent to each other in the Y-axis direction. Thus, electrons emitted from the upper electrode 14 of a particular upper electrode 14 do not reach the phosphor disposed above upper electrodes 14 of the other elements adjacent to this particular element in the Y-axis direction. Thus, blurring of image patterns can be avoided.

### Third Modification Example of First Embodiment

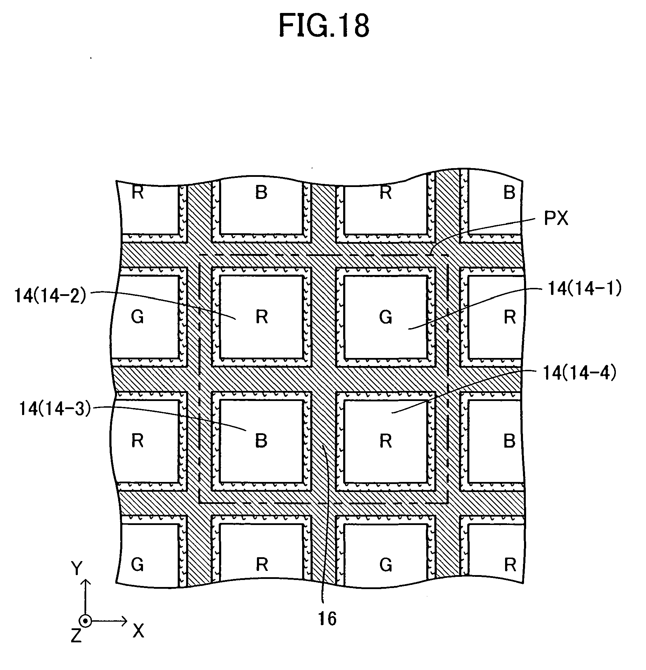

Next, a display incorporating a third modification example of the electron-emitting apparatus of the present invention will be described. As shown in the plan view of Fig. 18, one pixel PX of the third modification example includes four elements (a first upper electrode 14-1, a second upper electrode 14-2, a third upper electrode 14-3, and a fourth upper electrode 14-4), and focusing electrodes 16. In a plan view, the shape of each upper electrode 14 is a small square. The square is formed by dividing one pixel PX into four parts.

According to an x-y coordinate system conceived in the pixel PX with the origin disposed at the center of gravity of the four upper electrodes 14, the first upper electrode 14-1 is in the first quadrant, and a green phosphor (not shown) is disposed directly above the first upper electrode 14-1. The second upper electrode 14-2 is in the second quadrant, and a red phosphor (not shown) is disposed directly above the second upper electrode 14-2. The third upper electrode 14-3 is in the third quadrant, and a blue phosphor (not shown) is disposed directly above the third upper electrode 14-3. The fourth upper electrode 14-4 is in the fourth quadrant, and a red phosphor (not shown) is disposed directly above the fourth upper electrode 14-4. The focusing electrodes 16 are formed to surround each of the upper electrodes 14.

If the pixel arrangement is not a vertical stripe just like this example, it is preferable to surround each of the upper electrodes 14 with the focusing electrodes 16. With such arrangement, electrons emitted from the upper electrode 14 of a particular element reach only the phosphor disposed directly above the upper electrode 14. Thus, satisfactory color purity can be maintained, and blurring of the image patterns can be avoided.

### Second Embodiment

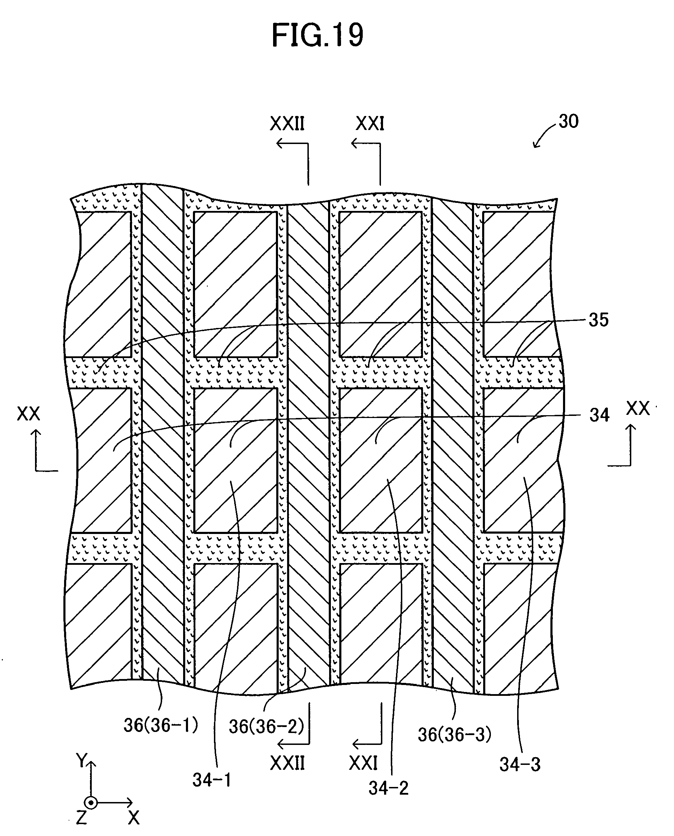

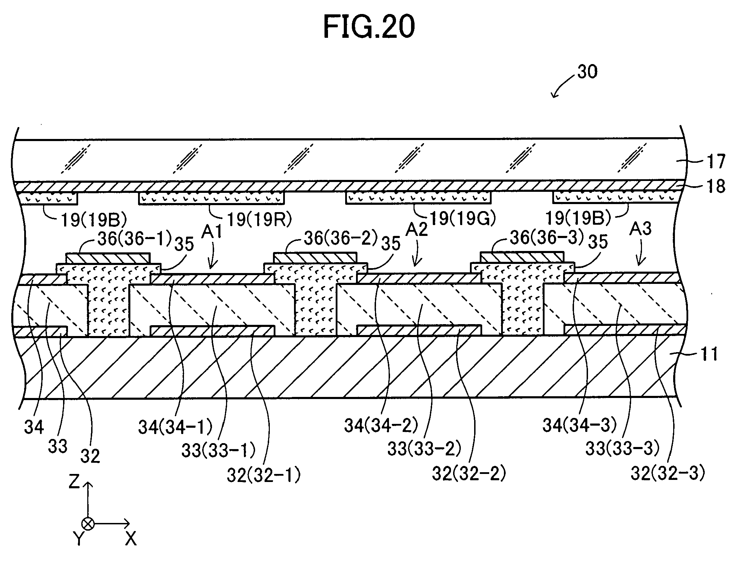

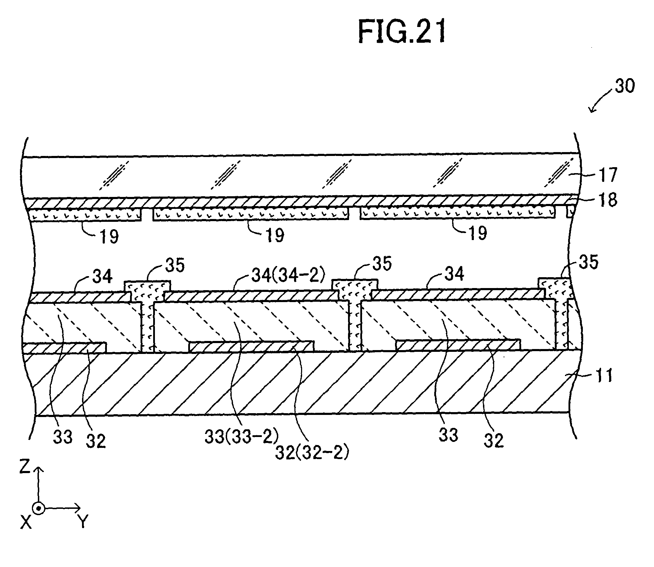

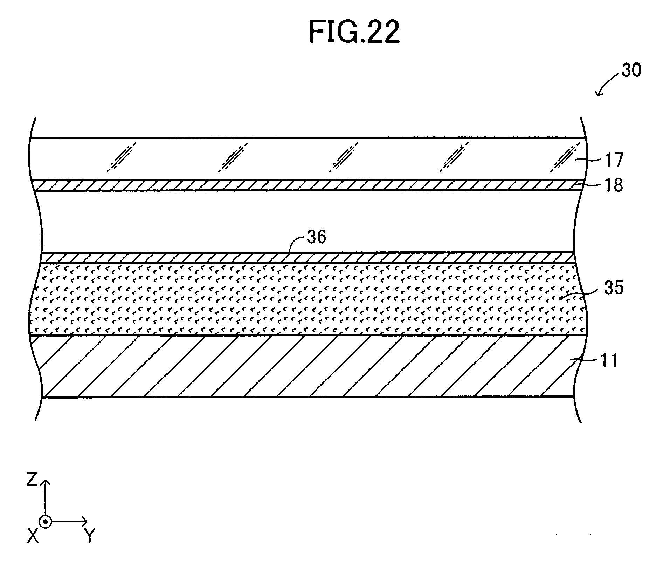

An electron-emitting apparatus 30 according to a second embodiment of the present invention will now be described with reference to Figs. 19 to 22. Fig. 19 is a partial plan view of the electron-emitting apparatus 30. Figs. 20, 21, and 22 are cross-sectional view of the electron-emitting apparatus 30 taken along lines XX-XX, XXI-XXI, and XXII-XXII, respectively, in Fig. 19. In Fig. 19, the transparent plate, the collector electrode, and the phosphors are omitted. In these drawings, like components as those of the electron emitting apparatus 10 are represented by the same reference numerals.

The electron-emitting apparatus 30 has completely independent elements each including a lower electrode 32, an emitter section 33, and an upper electrode 34. The elements are aligned on the substrate 11. The electron-emitting apparatus 30 is different from the electron emitting apparatus 10 in that the gaps between the elements are filled with insulators 35 and that focusing electrodes 36 are disposed on the upper surface of the insulators 35 between the upper electrodes 34 adjacent to each other in the X-axis direction.

Specifically, a first element A1, as shown in Fig. 20, includes a first lower electrode 32-1, a first emitter section 33-1, and a first upper electrode 34-1. Similarly, a second element A2 includes a second lower electrode 32-2, a second emitter section 33-2, and a second upper electrode 34-2, and a third element A3 includes a third lower electrode 32-3, a third emitter section 33-3, and a third upper electrode 34-3.

Each lower electrode 32 is a layer disposed on the upper surface of the substrate 11. The lower electrode 32 has a shape of a rectangle in a plan view, with the short side lying in the X-axis direction and the long side lying in the Y-axis direction. The lower electrodes 32 are arranged into a matrix in a plan view.

Each emitter section 33 is a rectangular parallelepiped having sides lying along the X axis, Y axis, and Z axis, respectively. The emitter sections 33 are formed on the upper surfaces of the substrate 11 and the lower electrodes 32. Each emitter section 33 is formed to cover the lower electrode 32.

Each upper electrode 34 is a layer disposed on the emitter section 33. The shape of the upper electrode 34 in a plan view is the same as that of the lower electrode 32. The upper electrode 34 is disposed to overlap (coincides with) the lower electrode 32 in a plan view.

The insulators 35 are formed to fill the gaps between the adjacent emitter sections 33 and the gaps between the adjacent upper electrodes 34. The upper surface of each insulator 35 is parallel to the X-Y plane and is slightly above the upper electrode 34. The insulator 35 is formed as to cover the end portions of the upper electrode 34 in the X-axis direction and the Y-axis direction. In other words, when viewed from above, the upper surface of each upper electrode 34 is exposed except for the portions covered by the insulator 35.

The focusing electrode 36 is a layer disposed on the insulator 35, and, as shown in Fig. 19, has the shape of a strip whose longitudinal direction is the Y-axis direction in a plan view. The focusing electrodes 36 are disposed between the upper electrodes 34 adjacent to each other in the X-axis direction in a plan view.

As with the electron emitting apparatus 10, the electron-emitting apparatus 30 is applied to a display and includes the transparent plate 17, the collector electrode 18, and the phosphors 19 (19R, 19G, and 19B). As shown in Fig. 20, the red phosphor 19R is disposed directly above the first upper electrode 34-1 of the first element A1, the green phosphor 19G is disposed directly above the second upper electrode 34-2 of the second element A2, and the blue phosphor 19B is disposed directly above the third upper electrode 34-3 of the third element A3.

The electron-emission control circuit (not shown) of the electron-emitting apparatus 30 can apply the potential difference V_{dif} between the lower electrode 32 and the upper electrode 34 of one element independently from between those of any of the other elements.

With the electron-emitting apparatus 30 having such a structure, electrons can be emitted from each of the elements either simultaneously or at independent (different) timings. Here, since the electron-emitting apparatus 30 has focusing electrodes 36 between the upper electrodes 34 adjacent in the X-axis direction, electrons emitted from a particular upper electrode 34 do not reach the phosphor disposed above another upper electrode adjacent to this particular upper electrode 34. Thus, in the display incorporating the electron-emitting apparatus 30, color purity does not decrease.

### Third Embodiment

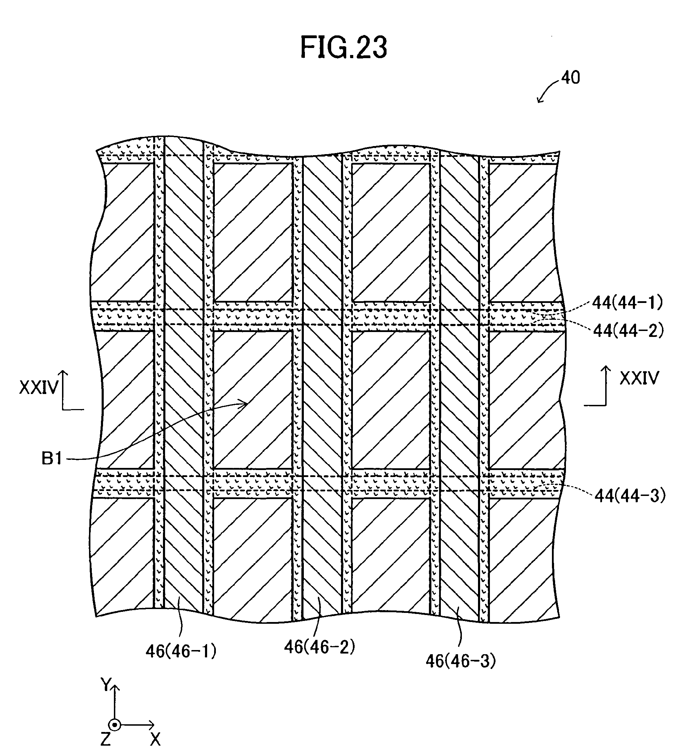

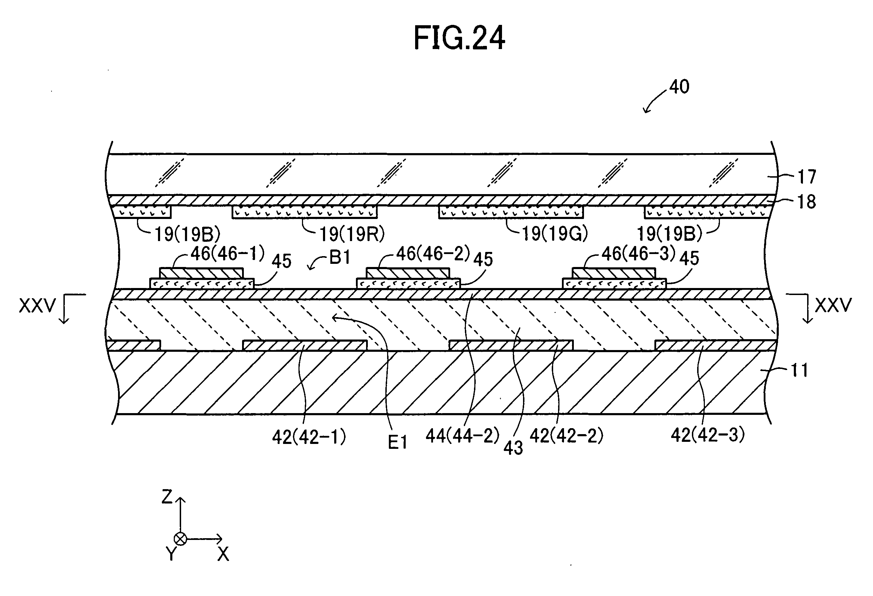

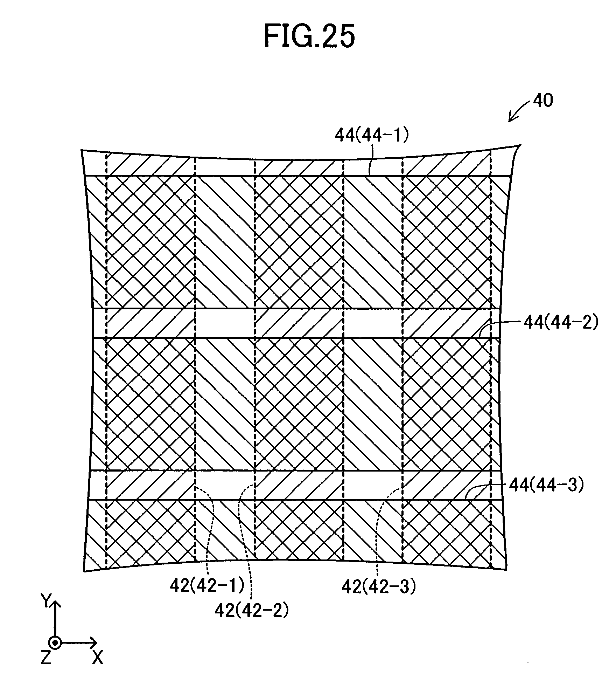

An electron-emitting apparatus 40 according to a third embodiment of the present invention will now be described with reference to Figs. 23 to 25. Fig. 23 is a partial plan view of the electron-emitting apparatus 40, and Fig. 24 is a cross-sectional view of the electron-emitting apparatus 40 taken along line XXIV-XXIV in Fig. 23. In Fig. 23, the transparent plate, the collector electrode, and the phosphors are omitted. Fig. 25 is a cross-sectional view taken along a plane of the upper surface of the upper electrode, i.e., a cross sectional view of the electron-emitting apparatus 40 taken along line XXV-XXV in Fig. 24. In these drawings, like components as those of the electron emitting apparatus 10 are represented by the same reference numerals.

The electron-emitting apparatus 40 includes the substrate 11, lower electrodes 42, an emitter section 43, upper electrodes 44, an insulating layer 45, and focusing electrodes 46.

The lower electrodes 42 are disposed in the same manner as the lower electrodes 12 of the electron emitting apparatus 10 of the first embodiment. That is, each lower electrode 42 is a layer formed on the substrate 11. As shown in Fig. 25, the lower electrode 42 has a shape of a narrow band whose longitudinal direction is the Y-axis direction in a plan view. The lower electrodes 42 are apart from each other by a predetermined distance in the X-axis direction. The emitter section 43 has a structure identical to that of the emitter section 13 of the electron emitting apparatus 10 according to the first embodiment.

The upper electrodes 44 are layers formed on the upper surface of the emitter section 43. In a plan view, each upper electrode 44 has a shape of a strip whose longitudinal direction is the X-axis direction. The upper electrodes 44 are separated from each other by a predetermined distance in the Y-axis direction.

The insulating layer 45 is disposed on the upper surfaces of the upper electrodes 44 and the upper surface of the emitter section 13 exposed between the upper electrodes 44 adjacent to each other in the Y-axis direction. The insulating layer 45 has windows (openings) 45a. Each window 45a is rectangular in shape and exposes part of the upper electrode 44 overlapping the lower electrode 42 in a plan view.

The focusing electrodes 46 are layers disposed on the upper surface of the insulating layer 45. In a plan view, each focusing electrode 46 has a shape of a strip whose longitudinal direction is the Y-axis direction and is disposed between the upper electrodes 44 adjacent to each other along the X-axis.

The electron emission control circuit (not shown) of the electron-emitting apparatus 40 selects a particular lower electrode 42 and applies a potential thereto. The electron emission control circuit also selects a particular upper electrode 44 and applies a predetermined potential thereto. In this manner, the electron emission control circuit applies the above-described potential difference V_{dif} between the particular lower electrode 42 and the particular upper electrode 44.

One electron-emitting element of the electron-emitting apparatus 40 is constituted from a lower electrode 42, an upper electrode 44, and part of the emitter section 43 sandwiched between the lower electrode 42 and the upper electrode 44. For example, a lower electrode 42-1, an upper electrode 44-2, and a portion E1 of the emitter section 43 sandwiched between the lower electrode 42-1 and the upper electrode 44-2 forms one electron-emitting element B1, as shown in Fig. 24. The electron-emitting apparatus 40 emits electrons in the upward direction from each element having such a structure.

The electron-emitting apparatus 40 has focusing electrodes 46 each of which is disposed between the upper electrodes 44 of the elements adjacent to each other in the X-axis direction. Thus, electrons emitted from a particular upper electrode 44 do not reach the phosphor disposed above the upper electrode 44 of an adjacent element. Thus, the display incorporating the electron-emitting apparatus 40 do not suffer from decreased color purity.
Modification Examples Related to Setting of Potential of Focusing Electrodes

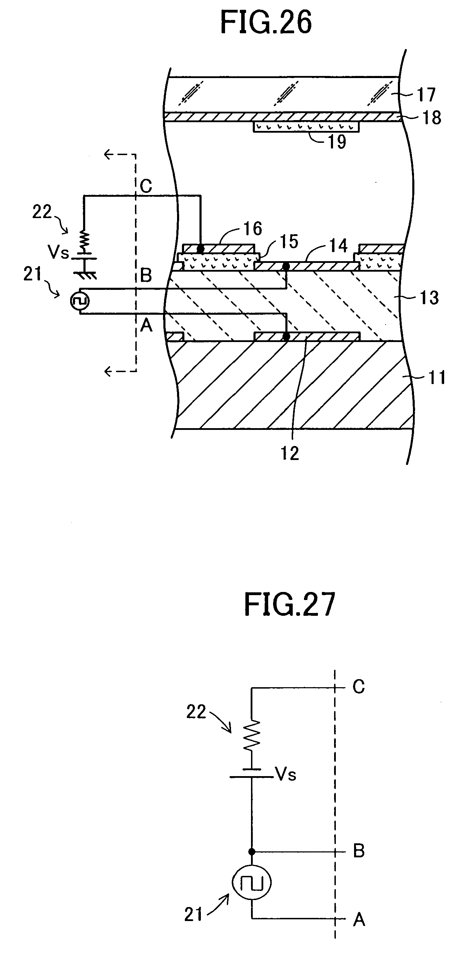

Modification examples of methods for applying potentials to the focusing electrodes (hereinafter, simply referred to as "circuit modification examples") will now be described. Fig. 26 shows the basic configuration of the electron emission control circuit 21 and the focusing electrode potential applying circuit 22 previously described. In the modification examples below, the manners on how nodes A, B, and C are connected and/or the circuit is modified from that in the embodiments described above. The nodes A, B, and C are connected to the lower electrode 12, the upper electrode 14, and the focusing electrode 16 respectively. Note that, in the circuits described below, the node A or B may be grounded directly. The node A or B may also be grounded through an impedance.

### First Circuit Modification Example

As shown in Fig. 27, according to a first circuit modification example, the positive electrode of the focusing electrode potential applying circuit 22 is coupled to the node B. By this arrangement, a predetermined potential difference Vs is constantly applied to the focusing electrode 16 with respect to the upper electrode 14.

### Second Circuit Modification Example

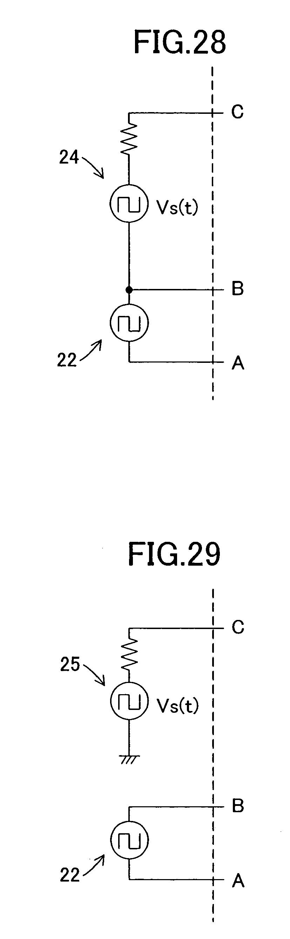

As shown in Fig. 28, according to a second circuit modification example, a driving circuit 24 capable of generating time-varying voltage is coupled to the node B. By this arrangement, a time-varying potential difference Vs(t) is applied to the focusing electrode 16 with respect to the upper electrode 14. Thus, for example, the negative potential difference Vs(t) applied to the focusing electrode 16 during the period (non-emission period) in which no electron emission or light-emission from the phosphor 19 is performed can be controlled to be larger than that during the period (light-emitting period or emission period) in which electrons are emitted to allow the phosphor 19 to emit light. Thus, unnecessary electron emission during non-emission period can be suppressed, and the contrast of images can thus be improved.

### Third Circuit Modification Example

As shown in Fig. 29, according to a third circuit modification example, a driving circuit 25 capable of generating time-varying voltage is grounded. In other words, in the third modification example, the constant-voltage power supply for the focusing electrode potential applying circuit 22 shown in Fig. 26 is replaced with the driving circuit 25. By this arrangement, a time-varying potential Vs(t) is applied to the focusing electrode 16. Thus, as in the second circuit modification example, a larger negative voltage can be applied to the focusing electrode 16 during the non-emission period than during the emission period. Thus, unnecessary electron emission during non-emission period can be suppressed, and the contrast of images can thus be improved.

### Fourth and Fifth Circuit Modification Examples

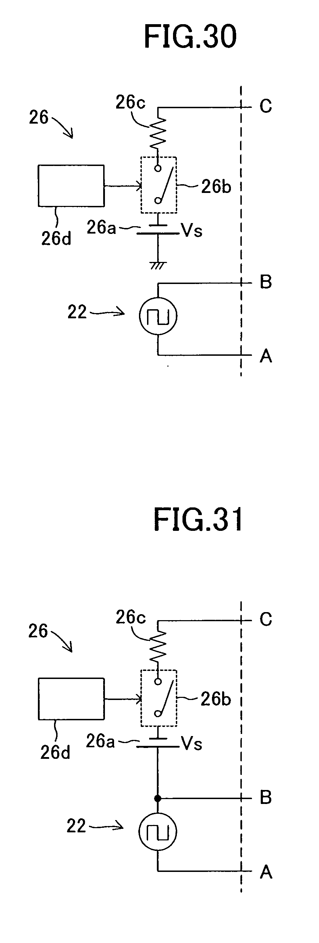

As shown in Fig. 30, a focusing electrode potential applying circuit 26 of a fourth modification example includes a constant-voltage power supply 26a, a switch (switching element) 26b, a resistance 26c, and a switch control circuit 26d. The constant-voltage power supply 26a generates a voltage Vs. The constant-voltage power supply 26a, the switch 26b, and the resistance 26c are connected in series. In this example, the positive electrode of the constant-voltage power supply 26a is grounded, and the resistance 26c is coupled to the node C.

The switch control circuit 26d controls the on/off status of the switch 26b. In detail, the switch control circuit 26d causes the switch 26b to become the off state (open) during the period of accumulating electrons in the emitter section 13 by applying a negative potential difference V_{dif}. As a result, the focusing electrode 16 enters a floating state. Moreover, during the period in which electrons are emitted through the micro through holes 14a in the upper electrode 14 by applying a positive potential difference V_{dif}, the switch control circuit 26d causes the switch 26b to become the on state (close). Thus, as in the first embodiment (Fig. 26) and the first circuit modification example (Fig. 27), a predetermined potential Vs is applied to the focusing electrode 16. Consequently, the emitted electrons can travel upward toward the upper electrode 14 without spreading.

As shown in Fig. 31, according to a fifth circuit modification example, the positive electrode of the constant-voltage power supply 26a of the focusing electrode potential applying circuit 26 in the fourth modification example is coupled to the node B, and the resistance 26c is coupled to the node C.

If the switch 26b is turned on in the fourth and fifth circuit modification examples during the period of accumulating electrons into the emitter section 13 by applying a negative potential difference V_{dif}, unnecessary power will be consumed. This is because a transient current generated by capacity coupling will flow between the upper electrode 14 and the focusing electrode 16 due to the change in potential between the upper electrode 14 and the focusing electrode 16. In the fourth and fifth modification examples, the switch 26b is turned off and the focusing electrode 16 enters the floating state during the period of accumulating electrons into the emitter section 13 by applying a negative potential difference V_{dif}. Thus, no current flows between the upper electrode 14 and the focusing electrode 16, and unnecessary power consumption can be avoided.

### Sixth Circuit Modification Example

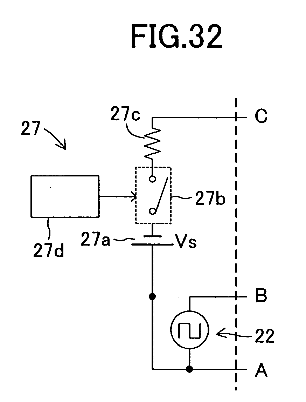

As shown in Fig. 32, a focusing electrode potential applying circuit 27 of a sixth circuit modification example includes a constant-voltage power supply 27a, a switch (switching element) 27b, a resistance 27c, and a switch control circuit 27d. The constant-voltage power supply 27a generates a voltage Vsh. The constant-voltage power supply 27a, the switch 27b, and the resistance 27c are connected in series. In this example, the negative electrode of the constant-voltage power supply 27a is coupled to the node A, and the resistance 27c is coupled to the node C. The switch control circuit 27d operates in the same manner as the switch control circuit 26d described above, i.e., controls the on/off status of the switch 27b.

In this example, when electrons are emitted, the potential of the focusing electrode 16 is a potential V1, which is higher than the potential of the lower electrode 12 by +Vsh. Here, the voltage Vsh is set so that the potential V1 is smaller than the potential difference V_{dif} during the electron emission period. As a result, the potential of the focusing electrode 16 becomes lower than the potential of the upper electrode 14. Thus, as in the above-described embodiments, the electrons emitted can travel upward toward the upper electrode 14 without spreading. Since the switch 27b conducts switching of the positive potential, Vsh, the range of choices for components can be expanded and the breakdown voltage can usually be increased, when the semiconductor relay is used as the switch, for instance.

The switch control circuit 27d turns off the switch 27b and allows the focusing electrode 16 to enter a floating state during the period of accumulating electrons into the emitter section 13 by applying a negative potential difference V_{dif}, as in the fourth and fifth circuit modification examples. Thus, no current flows between the upper electrode 14 and the focusing electrode 16, and unnecessary power consumption can be avoided.

As is described above, a potential can be applied to the focusing electrode in various manners. In the circuit modification examples described above, one common feature is that, during the period of emitting electrons through micro through holes of an upper electrode of an element, the state is maintained in which a potential lower than the potential of the upper electrode of the element is applied to the focusing electrode. If electrons are emitted from one of the two elements adjacent to the focusing electrode, the electrons from at least that electron-emitting element can reach a target position by applying to the focusing electrode a potential lower than that of the upper electrode of the electron-emitting element.

Further, as shown in Figs. 26 and 27, a particular voltage (potential) may be constantly applied to the focusing electrode. According to this arrangement, the circuit configuration of the focusing electrode potential applying means for applying a potential to the focusing electrode can be simplified.

Alternatively, as shown in Figs. 28 and 29, a time-varying voltage (potential) may be applied to the focusing electrode. According to this arrangement, a negative potential larger than that applied during the period of emitting electrons through the micro through holes can be applied to the focusing electrode during the period of not emitting electrons from the micro through holes in the upper electrode. With this operation, unnecessary electron emission can be suppressed.

Furthermore, as shown in Figs. 27 and 28, a potential difference with respect to the upper electrode of one element may be applied to the focusing electrode. With such an arrangement, the potential of the focusing electrode will have a predetermined potential difference with respect to the varying potential of the upper electrode. Thus, an electric field for allowing electrons to travel upward toward the upper electrode without spreading can be stably and accurately generated.

Furthermore, as shown in Figs. 30, 31, and 32, the focusing electrode may be maintained in a floating state during the period of allowing electrons, which are emitted from an upper electrode of one element toward the emitter section of that element, to be accumulated in the emitter section, and a predetermine potential may be applied during the period of emitting the electrons accumulated in the emitter section through micro through holes in the upper electrode.

According to this arrangement, unnecessary power consumption due to capacity coupling between the focusing electrode and the upper electrode or between the focusing electrode and the lower electrode can be avoided.
Modification Examples of Transparent Plate, Phosphors, and Collector Electrode

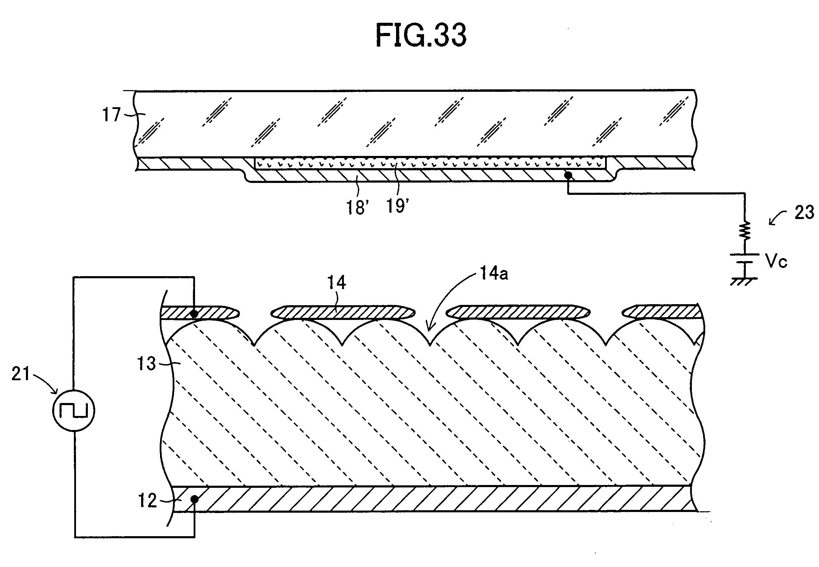

A modification example of the collector electrode 18 will now be described with reference to Fig. 33.

According to the modification example, a phosphor 19' is disposed on the back surface (the surface facing the upper electrode 14) of the transparent plate 17, and a collector electrode 18' is disposed so as to cover the phosphor 19'. The collector electrode 18' has a thickness that allows electrons emitted from the emitter section 13 through the micro through holes 14a in the upper electrode 14 to travel through the collector electrode 18'. The thickness of the collector electrode 18' is preferably 100 nm or less. The thickness of the collector electrode 18' can be increased if the kinetic energy of the emitted electrons is high.

The configuration of this modification example is typically employed in cathode ray tubes (CRTs). The collector electrode 18' functions as a metal back. The electrons emitted from the emitter section 13 through the micro through holes 14a in the upper electrode 14 travel through the collector electrode 18', enter the phosphor 19', and excites the phosphor 19', thereby allowing light emission. The advantages of this modification example are as follows:
(a) When the phosphor 19' is not electrically conductive, electrification (negative charging) of the phosphor 19' can be avoided. Thus, the electric field that accelerates electrons can be maintained.
(b) Since the collector electrode 18' reflects light generated by the phosphor 19', the light can be emitted toward the transparent plate 17-side (the emission surface side) with higher efficiency.
(c) Since collision of excessive electrons against the phosphor 19' can be avoided, deterioration of the phosphor 19' and the generation of gas from the phosphor 19' can be avoided.

### Materials of Constituent Components and Production Examples

The materials of the constituent components of the electron-emitting apparatuses described above and the method for producing the constituent components will now be described.

### Lower Electrode

The lower electrode can be made of an electrically conductive material described above. Examples of the conductive materials include metal conductors such as platinum, molybdenum, tungsten, gold, silver, copper, aluminum, nickel, and chromium. Examples of the preferable materials for the lower electrode will be listed in detail below.
(1) Conductors resistant to high-temperature oxidizing atmosphere (e.g., elemental metals or alloys)
   Examples: high-melting-point noble metals such as platinum, iridium, palladium, rhodium, and molybdenum
   Examples: materials mainly composed of a silver-palladium alloy, a silver-platinum alloy, or a platinum-palladium alloy
(2) Mixtures of ceramics having electrical isolation and being resistant to high-temperature oxidizing atmosphere and elemental metals
   Example: a cermet material of platinum and a ceramic
(3) Mixtures of ceramics having electrical isolation and being resistant to high-temperature oxidizing atmosphere and alloys
(4) Carbon-based or graphite-based materials

Among these materials above, elemental platinum and materials mainly composed of platinum alloys are particularly preferable. It should be noted that when a ceramic material is added to the electrode material, it is preferable to use roughly 5 to 30 percent by volume of the ceramic material. Materials similar to those of the upper electrode 14 described below may also be used for the lower electrode. The lower electrode is preferably formed by a thick-film forming process. The thickness of the lower electrode is preferably 20 µm or less and most preferably 5 µm or less.

### Emitter section

The dielectric material that constitutes the emitter section may be a dielectric material having a relatively high relative dielectric constant (for example, a relative dielectric constant of 1,000 or higher). Examples of the preferable material for the emitter section are as follows:
(1) Barium titanate, lead zirconate, lead magnesium niobate, lead nickel niobate, lead zinc niobate, lead manganese niobate, lead magnesium tantalate, lead nickel tantalate, lead antimony stannate, lead titanate, lead magnesium tungstate, and lead cobalt niobate
(2) Ceramics containing any combination of the substances listed in (1) above
(3) Ceramics described in (2) further containing an oxide of lanthanum, calcium, strontium, molybdenum, tungsten, barium, niobium, zinc, nickel, or manganese; ceramics described in (2) further containing any combination of the oxides described above; and ceramics described in (2) further containing other compounds
(4) Materials mainly containing 50% or more of the materials listed in (1) above

It is noted that, for example, a two-component system containing lead magnesium niobate (PMN) and lead titanate (PT), i.e., nPMN-mPT (n and m represent molar ratios), can exhibit a decreased Curie point and a large relative dielectric constant at room temperature by increasing the molar ratio of the PMN. In particular, nPMN-mPT having n of 0.85 to 1.0 and m of 1.0-n exhibits a relative dielectric constant of 3,000 or higher and is thus particularly preferable as the material for the emitter section. For example, the nPMN-mPT having n of 0.91 and m of 0.09 exhibits a relative dielectric constant of 15,000 at room temperature. The nPMN-mPT having n of 0.95 and m of 0.05 exhibits a relative dielectric constant of 20,000 at room temperature.

Furthermore, a three-component system containing lead magnesium niobate (PMN), lead titanate (PT), and lead zirconate (PZ), i.e., PMN-PT-PZ, can exhibit a higher relative dielectric constant by increasing the molar ratio of PMN. In this three-component system, the relative dielectric constant can be increased by adjusting the composition to near the morphotropic phase boundary (MPB) between the tetragonal and pseudocubic phases or between the tetragonal and rhombohedral phases.

For example, PMN:PT:PZ of 0.375:0.375:0.25 yields a relative dielectric constant of 5,500, and PMN:PT:PZ of 0.5:0.375:0.125 yields a relative dielectric constant of 4,500. The PMN-PT-PZ having these compositions is particularly preferable as the material for the emitter section.

Furthermore, a metal, such as platinum, may be preferably added to the dielectric material as long as the insulating ability can be ensured in order to increase the dielectric constant. For example, 20 percent by weight of platinum may preferably be added to the dielectric material.

A piezoelectric/electrostrictive layer, ferroelectric layer, or an antiferroelectric layer may be used as the emitter section. When the emitter section is a piezoelectric/electrostrictive layer, the piezoelectric/electrostrictive layer may be composed of a ceramic containing lead zirconate, lead magnesium niobate, lead nickel niobate, lead zinc niobate, lead manganese niobate, lead magnesium tantalate, lead nickel tantalate, lead antimony stannate, lead titanate, barium titanate, lead magnesium tungstate, lead cobalt niobate, or any combination of these.

Obviously, the emitter section may be made of a material containing 50 percent by weight or more of the above-described compound as the main component. Among the ceramics described above, a ceramic containing lead zirconate is most frequently used as the constituent material for the piezoelectric/electrostrictive layer that serves as the emitter section.

When the piezoelectric/electrostrictive layer is formed using a ceramic, the ceramic may further contain an oxide of lanthanum, calcium, strontium, molybdenum, tungsten, barium, niobium, zinc, nickel, or manganese, or any combination of these oxides, or other compounds. The ceramic described above may further contain SiO₂, CeO₂, Pb₅Ge₃O₁₁, or any combination of these. In particular, a PT-PZ-PMN-based piezoelectric material containing 0.2 percent by weight of SiO₂, 0.1 percent by weight of CeO₂, or 1 to 2 percent by weight of Pb₅Ge₃O₁₁ is preferable.

In detail, for example, a ceramic mainly composed of lead magnesium niobate, lead zirconate, and lead titanate, and containing lanthanum or strontium in addition to these is particularly preferable.

The piezoelectric/electrostrictive layer may be dense or porous. When the piezoelectric/electrostrictive layer is porous, the void ratio is preferably 40% or less.

When an antiferroelectric layer is used as the emitter section 13, the antiferroelectric layer preferably contains lead zirconate as a main component, lead zirconate and lead stannate as main components, lead zirconate containing lanthanum oxide as an additive, or a lead zirconate and lead stannate containing lead niobate as an additive.

The antiferroelectric layer may be porous. When the antiferroelectric layer is porous, the void ratio thereof is preferably 30% or less.

In particular, strontium tantalate bismuthate (SrBi₂Ta₂O₉) is suitable for the emitter section, since it exhibits low fatigue by repeated polarization reversal. The material exhibiting low fatigue is a laminar ferroelectric compound represented by general formula (BiO₂)²⁺(Aₘ₋₁BₘO₃ₘ₊₁)²⁻. In the formula, the ions of the metal A are Ca²⁺, Sr²⁺, Ba²⁺, Pb²⁺, Bi³⁺, La³⁺, or the like, and the ions of the metal B are Ti⁴⁺, Ta⁵⁺, Nb⁵⁺, or the like. Alternatively, a piezoelectric ceramic based on barium titanate, lead zirconate, or PZT may be combined with an additive to impart semiconductive properties to the ceramic. In such a case, since the emitter section 13 provide an uneven electric field distribution, it becomes possible to concentrate the electric field near the boundary with the upper electrode that contributes to release electrons.

The firing (baking) temperature of the emitter section 13 can be decreased by adding a glass component, such as lead borosilicate glass, or a low-melting-point compound (such as bismuth oxide) other than the glass component to the piezoelectric/electrostrictive/ferroelectric/antiferroelectric ceramic.

In forming the emitter section with the piezoelectric/electrostrictive/ferroelectric/antiferroelectric ceramic, the emitter section may be formed from a molded sheet, a laminated sheet, or a composite of the molded sheet or the laminated sheet stacked or bonded on a supporting substrate.

An emitter section that is hardly damaged by collision of electrons or ions can be produced by using a material having a high melting point or a high evaporation temperature, e.g., a non-lead material, for the emitter section.

The emitter section may be formed by various thick-film forming processes, such as a screen printing process, a dipping process, an application process, an electrophoresis process, and an aerosol deposition process; or by various thin-film forming processes, such as an ion-beam process, a sputtering process, a vacuum deposition process, an ion-plating process, a chemical vapor deposition (CVD) process, and a plating process. In particular, a powdered piezoelectric/electrostrictive material may be molded to form the emitter section, and the molded emitter section may be impregnated with a low-melting-point glass or sol particles to form a film at a temperature as low as 700°C or 600°C or less.

### Upper Electrode

An organometal paste that can produce a thin film by firing (baking) is used to form the upper electrode. An example of the organometal paste is a platinum resinate paste. The upper electrode is preferably made of an oxide that can decrease the fatigue due to polarization reversal or a platinum resinate paste containing an oxide for decreasing the fatigue by polarization reversal. Examples of the oxide that decreases the fatigue due to polarization reversal include ruthenium oxide (RuO₂), iridium oxide (lrO₂), strontium ruthenate (SrRuO₃), La₁₋ₓSrₓCoO₃ (e.g., x = 0.3 or 0.5), La₁₋ₓCaₓMnO₃ (e.g., x = 0.2), and La₁₋ₓCaₓMn_{1-y}Co_{y}O₃ (e.g., x = 0.2, y = 0.05).

It is also preferable to use an aggregate of scale-like substances, such as graphite, or an aggregate of conductive substances containing scale-like substances to form the upper electrode. Since such an aggregate has gaps between scales, the gaps can serve as the micro through holes in the upper electrode, and thus no baking process is needed to form the upper electrode. Alternatively, an organic resin and a metal thin film may be sequentially stacked on the emitter section and baked to burn off the organic resin and to thereby form micro through holes in the metal thin film, which serves as the upper electrode.

The upper electrode may be formed by various thick-film forming processes, such as a screen printing process, a spraying process, a coating process, a dipping process, an application process, and an electrophoresis process; or by various typical thin-film forming processes, such as a sputtering process, an ion-beam process, a vacuum deposition process, an ion-plating process, a chemical vapor deposition (CVD) process, and a plating process.

As is described above, each of the electron-emitting apparatuses of the embodiments and modification examples of the present invention includes at least two elements (a first element and a second element), each of which has an emitter section (e.g., the emitter section 13) made of a dielectric material, a lower electrode (e.g., the lower electrode 12) disposed below the emitter section, and an upper electrode (e.g., the upper electrode 14) disposed above the emitter section so as to oppose the lower electrode with the emitter section therebetween, the upper electrode having a plurality of micro through holes through which electrons are emitted by applying first a negative potential and then a positive potential to the upper electrode with respect to the lower electrode. The potential difference V_{dif} between the upper electrode and the lower electrode of the first element is variable independently from the potential difference between the upper electrode and the lower electrode of the second element.

The electron-emitting apparatus (the electron emission control circuit 21) provide the upper electrode and the lower electrode of the element from which electron emission is required with a potential difference V_{dif} which is a negative difference and then becomes a positive difference. The electron-emitting apparatus (the electron emission control circuit 21) does not apply a potential difference that can cause polarization reversal, to the upper electrode of the element from which no electron emission is required, i.e., the electron-emitting apparatus does not apply the negative potential difference V_{dif} for such an element. As a result, the energy consumption of the apparatus as a whole is reduced.

The electron-emitting apparatus further includes an insulator (e.g., the insulating layer 15) disposed between the upper electrode of the first element and the upper electrode of the second element and a focusing electrode (e.g., the focusing electrode 16) to which a predetermined voltage is applied and which is disposed on the insulator. At least during the period of electron emission, a potential lower than that of the upper electrode is applied to this focusing electrode, and thus the focusing electrode generates an electric field. Consequently, electrons emitted from the upper electrode of one element (e.g., the first element) and electrons emitted from the upper electrode of another element (e.g., the second element) adjacent to that element (e.g., the first element) with the focusing electrode interposed therebetween travel in the upward direction of each upper electrode without spreading (without spreading into a shape of a cone) due to the electric field generated by the focusing electrode. As a result, it becomes possible to accurately irradiate a target side with the electrons. In other words, cross-talks of electrons between the phosphors (or pixels) each of which is disposed above the respective upper electrode can be reduced.

When the apparatus includes the focusing electrode, the distance between the upper electrode and the collector electrode 18 can be increased since emitted electrons substantially travel in the upward direction of the upper electrode. Thus, dielectric breakdown between the upper electrode and the collector electrode 18 can be suppressed or avoided. Moreover, since the possibility of the dielectric breakdown between the upper electrode and the collector electrode 18 decreases, the positive potential Vc (collector voltage) applied to the collector electrode 18 can be increased. Thus, large energy can be imparted to the electrons reaching the phosphors, and the luminance of the display can be thereby increased.

It should be understood that the present invention is not limited to the embodiments described above and various other modifications can be adopted without departing from the scope of the invention. For example, the substrate 11 may be composed of a material primarily composed of aluminum oxide or a material primarily composed of a mixture of aluminum oxide and zirconium oxide.

## Claims

1. An electron-emitting apparatus comprising:
at least two elements, which are a first element and a second element, each of which includes:
an emitter section made of a dielectric material,
a lower electrode disposed below the emitter section, and
an upper electrode disposed above the emitter section to oppose the lower electrode with the emitter section therebetween, the upper electrode having a plurality of micro through holes through which electrons are emitted by applying first a negative potential and then a positive potential to the upper electrode with respect to the lower electrode, the potential difference between the upper electrode and the lower electrode of the first element being variable independently from the potential difference between the upper electrode and the lower electrode of the second element;
an insulator disposed between the upper electrode of the first element and the upper electrode of the second element; and
a focusing electrode to which a predetermined voltage is applied, the focusing electrode being disposed on the insulator.

2. The electron-emitting apparatus according to claim 1, wherein the focusing electrode is disposed such that, in a plan view, the focusing electrode does not overlap any of the upper electrodes of the two elements.

3. The electron-emitting apparatus according to claim 1 or 2, further comprising potential difference applying means for
applying a potential difference between the upper electrode and the lower electrode of the first element so that the upper electrode has a negative potential with respect to the lower electrode so as to allow electrons to be released from the upper electrode toward the emitter section of the first element and thereby to be accumulated in a region near the upper electrode of the emitter section, subsequently applying a potential difference between the upper electrode and the lower electrode of the first element so that the upper electrode has a positive potential with respect to the lower electrode so as to allow electrons accumulated in the emitter section to be emitted through the micro through holes in the upper electrode of the first element, and
applying a potential difference between the upper electrode and the lower electrode of the second element so that the upper electrode has a negative potential with respect to the lower electrode so as to allow electrons to be released from the upper electrode toward the emitter section of the second element and thereby to be accumulated in a region near the upper electrode of the emitter section, subsequently applying a potential difference between the upper electrode and the lower electrode so that the upper electrode has a positive potential with respect to the lower electrode so as to allow electrons accumulated in the emitter section to be emitted through the micro through holes in the upper electrode of the second element.

4. The electron-emitting apparatus according to one of claims 1 to 3, further comprising focusing electrode potential applying means for applying said predetermined potential to the focusing electrode.

5. The electron-emitting apparatus according to claim 4, wherein the focusing electrode potential applying means applies to the focusing electrode said predetermined potential which is a potential lower than the potential of the upper electrode during a period of emitting electrons through the micro through holes of the upper electrode of the first element.

6. The electron-emitting apparatus according to claim 5, wherein the focusing electrode potential applying means applies a constant voltage as the predetermined voltage to the focusing electrode.

7. The electron-emitting apparatus according to claim 5, wherein the focusing electrode potential applying means applies time-varying voltage as the predetermined voltage to the focusing electrode.

8. The electron-emitting apparatus according to claim 6 or 7, wherein the focusing electrode potential applying means applies to the focusing electrode said potential difference with respect to the upper electrode of the first element.

9. The electron-emitting apparatus according to one of claims 4 to 8, wherein the focusing electrode potential applying means causes the focusing electrode to maintain a floating state during a period in which electrons are released from the upper electrode of the first element toward the emitter section of the first element so as to accumulate the electrons in the emitter section, and applies to the focusing electrode the predetermined potential during a period in which the electrons accumulated in the emitter section are emitted through the micro through holes in the upper electrode.

10. The electron-emitting apparatus according to one of claims 1 to 9, further comprising:
a first phosphor for emitting light of a first color by electron irradiation, the first phosphor being disposed above the upper electrode of the first element; and
a second phosphor for emitting light of a second color by electron irradiation, the second phosphor being disposed above the upper electrode of the second element.

11. The electron-emitting apparatus according to one of claims 1 to 10, further comprising:
a collector electrode disposed near the first phosphor and the second phosphor in such a manner that the collector electrode is opposed to the upper electrodes of the first and second elements.

12. The electron-emitting apparatus according to one of claims 1 to 11, further comprising a space-forming member for forming an hermetically closed space, wherein at least an upper part of the emitter section and the upper electrode of the first element and an upper part of the emitter section and the upper electrode of the second element are disposed inside the hermetically closed space under substantial vacuum.
